# EUROPEAN PATENT APPLICATION

(11) **EP 4 645 971 A1**
(43) Date of publication of application: **05.11.2025**
(21) Application number: 24744160.3
(22) Date of filing: 11.01.2024
(51) Int. Cl.: H04W 56/00

(54) **CLOCK SYNCHRONIZATION METHOD AND COMMUNICATION APPARATUS**

(30) Priority: 20.01.2023 CN 202310125209
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Pfenning, Meinig & Partner mbB
(86) International application number: PCT/CN2024/071852
(87) International publication number: WO 2024/152984

(57) **Abstract**

Embodiments of this application provide a clock synchronization method and a communication apparatus. The method includes: sending a first request message to a first network element, where the first request message is used to request to provide a clock synchronization service for a first terminal device and at least one second terminal device, and the first request message includes identifiers of the first terminal device and the at least one second terminal device; and receiving a time service response message from an access network device. A request message used to request to provide the clock synchronization service for the first terminal device and the at least one second terminal device is sent to the first network element, so that the access network device can provide a time service for the first terminal device and the at least one second terminal device, thereby flexibly implementing clock synchronization between the first terminal device and the at least one second terminal device.

## Description

This application claims priority to Chinese Patent Application No. 202310125209.X, filed with the China National Intellectual Property Administration on January 20, 2023 and entitled "CLOCK SYNCHRONIZATION METHOD AND COMMUNICATION APPARATUS", which is incorporated herein by reference in its entirety.

### TECHNICAL FIELD

This application relates to the field of communication technologies, and more specifically, to a clock synchronization method and a communication apparatus.

### BACKGROUND

Generally, all tasks are based on a clock reference in fields such as communication and industrial control. Therefore, accurate clock synchronization is a basis. For example, in a scenario in which a plurality of robots (an example of a terminal device) collaboratively collect measurement data, a primary robot may perform data analysis based on data collected from another robot. This requires real-time and timely data. In other words, clock synchronization needs to be achieved among robots in one working group (working group).

Currently, a terminal device may send a time service request to a clock synchronization function network element via a base station, to obtain clock information of a 5th generation (5th generation, 5G) system. In a device to device (device to device, D2D) scenario, if a plurality of terminal devices all have a time service requirement, according to an existing solution, each of the plurality of terminal devices sends a time service request to a base station, and the clock synchronization function network element processes the time service requests one by one and selects a clock that satisfies a requirement of the time service request to provide a time service for each terminal device. However, actual application scenarios are diversified, and a time service solution with better adaptability is urgently needed.

### SUMMARY

Embodiments of this application provide a clock synchronization method and a communication apparatus, to flexibly implement clock synchronization between a plurality of terminal devices.

According to a first aspect, a clock synchronization method is provided. The method may be performed by a first terminal device, or may be performed by a component (for example, a processor, a chip, or a chip system) of a first terminal device, or may be implemented by a logical module or software that can implement a part or all of functions of a first terminal device.

The method includes: sending a first request message to a first network element, where the first request message is used to request to provide a clock synchronization service for the first terminal device and at least one second terminal device, and the first request message includes identifiers of the first terminal device and the at least one second terminal device; and receiving a time service response message from an access network device.

Based on the foregoing technical solution, a request message used to request to provide the clock synchronization service for the first terminal device and the at least one second terminal device is sent to the first network element, so that the access network device can provide the clock synchronization service for the first terminal device and the at least one second terminal device, thereby more flexibly implementing clock synchronization between the first terminal device and the at least one second terminal device.

With reference to the first aspect, in some implementations of the first aspect, before the first request message is sent to the first network element, it is determined whether time service statuses of a plurality of terminal devices change, where the plurality of terminal devices include the at least one second terminal device; and the first request message is sent to the first network element when it is determined that a time service status of each of the at least one second terminal device changes.

Based on the foregoing technical solution, clock synchronization can be achieved between a terminal device whose time service status changes and the first terminal device, to ensure time service accuracy of the terminal device whose time service status changes.

With reference to the first aspect, in some implementations of the first aspect, first information is received from each of the plurality of terminal devices, where the first information is used to represent a time service status of the terminal device; and it is determined, based on the first information, whether the time service statuses of the plurality of terminal devices change.

Based on the foregoing technical solution, it may be learned, based on the first information of the terminal device, whether the time service status of the terminal device changes.

With reference to the first aspect, in some implementations of the first aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the first aspect, in some implementations of the first aspect, the first terminal device and the at least one second terminal device belong to one terminal device group, and the first terminal device provides a time service for a terminal device in the terminal device group.

For example, the first terminal device may be a primary terminal device in the terminal device group.

Based on the foregoing technical solution, the primary terminal device in the terminal device group may provide a time service for another terminal device, to implement clock synchronization of the terminal device in the terminal device group.

With reference to the first aspect, in some implementations of the first aspect, the first request message further includes an identifier of the terminal device group, and the identifier of the terminal device group indicates that clock synchronization needs to be implemented between terminal devices in the terminal device group.

With reference to the first aspect, in some implementations of the first aspect, the first network element is an access and mobility management function network element or a clock sensitive communication and clock synchronization function network element. The first terminal device sends the first request message to the access and mobility management function network element by using the access network device; or the first terminal device sends the first request message to the clock sensitive communication and clock synchronization function network element by using an application function network element.

According to a second aspect, a clock synchronization method is provided. The method may be performed by a first network element, or may be performed by a component (for example, a processor, a chip, or a chip system) of a first network element, or may be implemented by a logical module or software that can implement a part or all of functions of a first network element.

The method includes: receiving a first request message from a first terminal device, where the first request message is used to request to provide a clock synchronization service for a first terminal device and at least one second terminal device, and the first request message includes identifiers of the first terminal device and the at least one second terminal device; and sending a first time service indication to an access network device, where the first time service indication indicates to provide a time service for the first terminal device and the at least one second terminal device.

Based on the foregoing technical solution, the first request message from the first terminal device is received, so that the access network device can provide a time service for the first terminal device and the at least one second terminal device, thereby more flexibly implementing clock synchronization between the first terminal device and the at least one second terminal device.

With reference to the second aspect, in some implementations of the second aspect, the first network element is an access and mobility management function network element or a clock sensitive communication and clock synchronization function network element. The access and mobility management function network element receives the first request message from the first terminal device by using the access network device; or the clock sensitive communication and clock synchronization function network element receives the first request message from the first terminal device by using an application function network element.

With reference to the second aspect, in some implementations of the second aspect, the first network element obtains subscription information of the first terminal device and the at least one second terminal device; and determines, based on the subscription information, to send the first time service indication to the access network device.

Based on the foregoing technical solution, it can be determined, by obtaining the subscription information of the terminal device, whether the access network device can provide the clock synchronization service for the first terminal device and the at least one second terminal device, thereby reducing signaling overheads.

With reference to the second aspect, in some implementations of the second aspect, the first terminal device and the at least one second terminal device belong to one terminal device group. Subscription information of the terminal device group is obtained based on an identifier of the terminal device group; and the first time service indication is sent to the access network device based on the subscription information of the terminal device group.

Based on the foregoing technical solution, it can be determined, by obtaining the subscription information of the terminal device group, whether the access network device can provide the clock synchronization service for a terminal device in the terminal device group, thereby reducing signaling overheads.

With reference to the second aspect, in some implementations of the second aspect, the subscription information includes at least one of the following: information about whether the first terminal device and the at least one second terminal device are allowed to accept the clock synchronization service provided by the access network device, information about whether the at least one second terminal device accepts that the application function network element requests the clock synchronization service for the at least one second terminal device, information about whether the at least one second terminal device accepts that the first terminal device requests the clock synchronization service for the at least one second terminal device, and information about whether the first terminal device has a capability of requesting the clock synchronization service for the at least one second terminal device.

According to a third aspect, a clock synchronization method is provided. The method may be performed by a first terminal device, or may be performed by a component (for example, a processor, a chip, or a chip system) of a first terminal device, or may be implemented by a logical module or software that can implement a part or all of functions of a first terminal device.

The method includes: obtaining a first clock difference, where the first clock difference is a difference between a first clock of the first terminal device and a second clock of an access network device; sending a second request message to a first network element, where the second request message is used to request the access network device to provide a clock synchronization service for at least one second terminal device, the second request message includes an identifier of the at least one second terminal device and a first error, the first error is an upper limit that is of an error of a time service provided by the access network device for the second terminal device and that is required by each of the at least one second terminal device, and the first error is determined based on the first clock difference; and receiving a time service response message from the access network device.

Based on the foregoing technical solution, the request message used by the at least one second terminal device to provide the clock synchronization service is sent to the first network element, so that the access network device can provide a time service for the at least one second terminal device. In addition, the first terminal device may implement clock synchronization between the first terminal device and the at least one second terminal device based on the difference between the clock of the first terminal device and the clock of the access network device.

With reference to the third aspect, in some implementations of the third aspect, a third request message is sent to the access network device, where the third request message is used to request clock information of the second clock. The first terminal device receives the clock information from the access network device, and the first terminal device determines the first clock difference based on the clock information.

With reference to the third aspect, in some implementations of the third aspect, a fourth request message is sent to the access network device, where the fourth request message is used to request the first clock difference; and the first clock difference is received from the access network device, where the first clock difference is determined based on clock information of the second clock.

Based on the foregoing technical solution, the first terminal device may determine the first clock difference by obtaining the clock information of the second clock or obtain the first clock difference from the access network device, so that the first terminal device can implement clock synchronization between the first terminal device and the at least one second terminal device based on the first clock difference.

With reference to the third aspect, in some implementations of the third aspect, the clock information includes at least one of the following information: a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

With reference to the third aspect, in some implementations of the third aspect, the first clock difference is sent to a third terminal device, where the first clock difference is used for clock synchronization between the third terminal device and the at least one second terminal device.

With reference to the third aspect, in some implementations of the third aspect, the first terminal device determines whether time service statuses of a plurality of terminal devices change, where the plurality of terminal devices include the at least one second terminal device; and sends the second request message to the first network element when determining that a time service status of each of the at least one second terminal device changes.

Based on the foregoing technical solution, clock synchronization can be achieved between a terminal device whose time service status changes and the first terminal device, to ensure time service accuracy of the terminal device whose time service status changes.

With reference to the third aspect, in some implementations of the third aspect, first information is received from each of the plurality of terminal devices, where the first information is used to represent a time service status of the terminal device; and it is determined, based on the first information, whether the time service statuses of the plurality of terminal devices change.

Based on the foregoing technical solution, it may be learned, based on the first information of the terminal device, whether the time service status of the terminal device changes.

With reference to the third aspect, in some implementations of the third aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the third aspect, in some implementations of the third aspect, the first terminal device and the at least one second terminal device belong to one terminal device group, and before the second request message is sent to the first network element, a time service is provided for a terminal device in the terminal device group.

With reference to the third aspect, in some implementations of the third aspect, the second request message further includes an identifier of the terminal device group, and the identifier of the terminal device group indicates that clock synchronization needs to be implemented between terminal devices in the terminal device group.

According to a fourth aspect, a clock synchronization method is provided. The method may be performed by a first terminal device, or may be performed by a component (for example, a processor, a chip, or a chip system) of a first terminal device, or may be implemented by a logical module or software that can implement a part or all of functions of a first terminal device.

The method includes: obtaining a first clock difference, where the first clock difference is a difference between a first clock of the first terminal device and a second clock of an access network device; sending a second request message to a first network element, where the second request message is used to request the access network device to provide a clock synchronization service for at least one second terminal device, and the second request message includes an identifier of the at least one second terminal device; and performing clock synchronization between the first terminal device and the at least one second terminal device based on the first clock difference.

Based on the foregoing technical solution, the request message used by the at least one second terminal device to provide the clock synchronization service is sent to the first network element, so that the access network device can provide the clock synchronization service for the at least one second terminal device. Therefore, the first terminal device may implement clock synchronization between the first terminal device and the at least one second terminal device based on the clock difference between the first terminal device and the access network device.

With reference to the fourth aspect, in some implementations of the fourth aspect, a third request message is sent to the access network device, where the third request message is used to request clock information of the second clock. The first terminal device receives the clock information from the access network device, and the first terminal device determines the first clock difference based on the clock information.

With reference to the fourth aspect, in some implementations of the fourth aspect, a fourth request message is sent to the access network device, where the fourth request message is used to request the first clock difference; and the first clock difference is received from the access network device, where the first clock difference is determined based on the clock information of the second clock.

Based on the foregoing technical solution, the first terminal device may determine the first clock difference by obtaining the clock information of the second clock or obtain the first clock difference from the access network device, so that the first terminal device can implement clock synchronization between the first terminal device and the at least one second terminal device based on the first clock difference.

With reference to the fourth aspect, in some implementations of the fourth aspect, the clock information includes at least one of the following information: a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

With reference to the fourth aspect, in some implementations of the fourth aspect, first data is received from the at least one second terminal device, where the first data carries a first timestamp, and the first timestamp is determined based on the second clock; and the first timestamp is calibrated based on the first clock difference.

Based on the foregoing technical solution, because the second terminal device accepts the clock synchronization service provided by the access network device, clock synchronization can be achieved between the second terminal device and the access network device. Therefore, the first terminal device can calibrate the timestamp of the data from the second terminal device based on the first clock difference, so that clock synchronization is achieved for data between the first terminal device and the at least one second terminal device.

With reference to the fourth aspect, in some implementations of the fourth aspect, the first time difference is sent to the at least one second terminal device; and first data is received from the at least one second terminal device, where the first data carries a second timestamp, and the second timestamp is determined based on the second clock and the first clock difference.

Based on the foregoing technical solution, because the second terminal device accepts the clock synchronization service provided by the access network device, clock synchronization can be achieved between the second terminal device and the access network device. Therefore, the second terminal device can calibrate the clock of the second terminal device based on the first clock difference, so that clock synchronization is achieved for data between the first terminal device and the at least one second terminal device.

With reference to the fourth aspect, in some implementations of the fourth aspect, the first clock difference is sent to a third terminal device, where the first clock difference is used for clock synchronization between the third terminal device and the at least one second terminal device.

With reference to the fourth aspect, in some implementations of the fourth aspect, the first terminal device determines whether time service statuses of a plurality of terminal devices change, where the plurality of terminal devices include the at least one second terminal device; and sends the second request message to the first network element when determining that a time service status of each of the at least one second terminal device changes.

Based on the foregoing technical solution, clock synchronization can be achieved between a terminal device whose time service status changes and the first terminal device, to ensure time service accuracy of the terminal device whose time service status changes.

With reference to the fourth aspect, in some implementations of the fourth aspect, first information is received from each of the plurality of terminal devices, where the first information is used to represent a time service status of the terminal device; and it is determined, based on the first information, whether the time service statuses of the plurality of terminal devices change.

Based on the foregoing technical solution, it may be learned, based on the first information of the terminal device, whether the time service status of the terminal device changes.

With reference to the fourth aspect, in some implementations of the fourth aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the fourth aspect, in some implementations of the fourth aspect, the first terminal device and the at least one second terminal device belong to one terminal device group, and before the second request message is sent to the first network element, a time service is provided for a terminal device in the terminal device group.

With reference to the fourth aspect, in some implementations of the fourth aspect, the second request message further includes an identifier of the terminal device group, and the identifier of the terminal device group indicates that clock synchronization needs to be implemented between terminal devices in the terminal device group.

According to a fifth aspect, a clock synchronization method is provided. The method may be performed by a first network element, or may be performed by a component (for example, a processor, a chip, or a chip system) of a first network element, or may be implemented by a logical module or software that can implement a part or all of functions of a first network element.

The method includes: receiving a second request message from a first terminal device, where the second request message is used to request an access network device to provide a clock synchronization service for at least one second terminal device, and the second request message includes an identifier of the at least one second terminal device; or the second request message includes an identifier of the at least one second terminal device and a first error, the first error is an upper limit that is of an error of a time service provided by the access network device for the second terminal device and that is required by each of the at least one second terminal device, and the first error is determined based on a first clock difference; and sending a second time service indication to the access network device, where the second time service indication indicates to provide a time service for the at least one second terminal device, the first clock difference is a difference between a first clock of the first terminal device and a second clock of the access network device, and the first clock difference is used for clock synchronization between the first terminal device and the at least one second terminal device.

Based on the foregoing technical solution, the second request message is received from the first terminal device, so that the access network device can provide the clock synchronization service for the first terminal device and the at least one second terminal device, thereby implementing clock synchronization between the first terminal device and the at least one second terminal device. In addition, the clock synchronization service is requested to be provided for the first terminal device and the at least one second terminal device by using the first request message, thereby reducing signaling overheads.

With reference to the fifth aspect, in some implementations of the fifth aspect, the first network element is an access and mobility management function network element or a clock sensitive communication and clock synchronization function network element. The access and mobility management function network element receives the second request message from the first terminal device by using the access network device; or the clock sensitive communication and clock synchronization function network element receives the second request message from the first terminal device by using an application function network element.

With reference to the fifth aspect, in some implementations of the fifth aspect, the first network element obtains subscription information of the first terminal device and the at least one second terminal device; and the first network element determines, based on the subscription information, to send the second time service indication to the access network device.

With reference to the fifth aspect, in some implementations of the fifth aspect, the first terminal device and the at least one second terminal device belong to one terminal device group. The second request message further includes an identifier of the terminal device group. Subscription information of the terminal device group is obtained based on the identifier of the terminal device group; and the second time service indication is sent to the access network device based on the subscription information of the terminal device group.

With reference to the fifth aspect, in some implementations of the fifth aspect, the subscription information includes at least one of the following: information about whether the first terminal device and the at least one second terminal device are allowed to accept time service information of the access network device, information about whether the at least one second terminal device accepts that the application function network element requests the clock synchronization service for the at least one second terminal device, information about whether the at least one second terminal device accepts that the first terminal device requests the clock synchronization service for the at least one second terminal device, and information about whether the first terminal device has a capability of requesting the clock synchronization service for the at least one second terminal device.

With reference to the fifth aspect, in some implementations of the fifth aspect, before the second request message is received from the first terminal device, sixth indication information is sent to the access network device, where the sixth indication information indicates to send clock information of the second clock to the first terminal device, and the clock information is used to determine the first clock difference.

With reference to the fifth aspect, in some implementations of the fifth aspect, the clock information includes at least one of the following information: a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

According to a sixth aspect, a clock synchronization method is provided. The method may be performed by a first terminal device, or may be performed by a component (for example, a processor, a chip, or a chip system) of a first terminal device, or may be implemented by a logical module or software that can implement a part or all of functions of a first terminal device.

The method includes: The first terminal device sends a third time service indication to a third terminal device, where the first terminal device is configured to provide a clock synchronization service for the third terminal device, the third time service indication indicates the third terminal device to provide a time service for at least one second terminal device, and the third time service indication carries an identifier of the at least one second terminal device; and the first terminal device receives a time service response from the third terminal device.

Based on the foregoing technical solution, the request message used to request to provide the clock synchronization service for the at least one second terminal device is sent to the third terminal device, so that the third terminal device can provide the clock synchronization service for the at least one second terminal device, thereby implementing clock synchronization among the first terminal device, the third terminal device, and the at least one second terminal device. In addition, signaling overheads can be reduced by requesting by using the request message to provide the clock synchronization service for the at least one second terminal device.

With reference to the sixth aspect, in some implementations of the sixth aspect, before the first terminal device sends the time service indication to the third terminal device, the first terminal device determines whether time service statuses of a plurality of terminal devices change, where the plurality of terminal devices include the third terminal device and the at least one second terminal device; and the first terminal device sends the third time service indication to the third terminal device when determining that a time service status of each of the at least one second terminal device changes.

With reference to the sixth aspect, in some implementations of the sixth aspect, the first terminal device receives first information from each of the plurality of terminal devices, where the first information is used to represent a time service status of the terminal device; and the first terminal device determines, based on the first information, whether the time service statuses of the plurality of terminal devices change.

With reference to the sixth aspect, in some implementations of the sixth aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the sixth aspect, in some implementations of the sixth aspect, the first terminal device, the third terminal device, and the at least one second terminal device belong to one terminal device group. Before the first terminal device sends, to the third terminal device, an indication for providing the clock synchronization service, the first terminal device provides a time service for a terminal device in the terminal device group.

According to a seventh aspect, a communication apparatus is provided. The apparatus includes a transceiver unit. The transceiver unit is configured to send a first request message to a first network element. The first request message is used to request a communication network to provide a clock synchronization service for a first terminal device and at least one second terminal device. The first request message includes identifiers of the first terminal device and the at least one second terminal device. The transceiver unit is further configured to receive a time service response message from the access network device.

With reference to the seventh aspect, in some implementations of the seventh aspect, the apparatus further includes a processing unit. The processing unit is configured to determine whether time service statuses of a plurality of terminal devices change, where the plurality of terminal devices include the at least one second terminal device. The transceiver unit is further configured to send the first request message to the first network element when it is determined that a time service status of each of the at least one second terminal device changes.

With reference to the seventh aspect, in some implementations of the seventh aspect, the transceiver unit is further configured to receive first information from each of the plurality of terminal devices, where the first information is used to represent a time service status of the terminal device. The determining unit is specifically configured to determine, based on the first information, whether the time service statuses of the plurality of terminal devices change.

With reference to the seventh aspect, in some implementations of the seventh aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the seventh aspect, in some implementations of the seventh aspect, the apparatus and the at least one second terminal device belong to one terminal device group, and the processing unit is further configured to provide a time service for a terminal device in the terminal device group.

With reference to the seventh aspect, in some implementations of the seventh aspect, the first request message further includes an identifier of the terminal device group, and the identifier of the terminal device group indicates that clock synchronization needs to be implemented between terminal devices in the terminal device group.

With reference to the seventh aspect, in some implementations of the seventh aspect, the first network element is an access and mobility management function network element or a clock sensitive communication and clock synchronization function network element. The transceiver unit sends the first request message to the access and mobility management function network element by using the access network device; or the transceiver unit sends the first request message to the clock sensitive communication and clock synchronization function network element by using an application function network element.

According to an eighth aspect, a communication apparatus is provided. The apparatus includes a transceiver unit. The transceiver unit is configured to receive a first request message from a first terminal device, where the first request message is used to request a communication network to provide a clock synchronization service for the first terminal device and at least one second terminal device, and the first request message includes identifiers of the first terminal device and the at least one second terminal device. The transceiver unit is further configured to send a first time service indication to an access network device, where the first time service indication indicates to provide the clock synchronization service for the first terminal device and the at least one second terminal device.

With reference to the eighth aspect, in some implementations of the eighth aspect, the apparatus is an access and mobility management function network element or a clock sensitive communication and clock synchronization function network element. The transceiver unit receives the first request message from the first terminal device by using the access network device; or the transceiver unit receives the first request message from the first terminal device by using an application function network element.

With reference to the eighth aspect, in some implementations of the eighth aspect, the apparatus further includes a processing unit. The processing unit is configured to obtain subscription information of the first terminal device and the at least one second terminal device. The processing unit is further configured to determine, based on the subscription information, to send the first time service indication to the access network device.

With reference to the eighth aspect, in some implementations of the eighth aspect, the first terminal device and the at least one second terminal device belong to one terminal device group. The processing unit is specifically configured to obtain subscription information of the terminal device group based on an identifier of the terminal device group. The processing unit is specifically configured to send the first time service indication to the access network device based on the subscription information of the terminal device group.

With reference to the eighth aspect, in some implementations of the eighth aspect, the subscription information includes at least one of the following: information about whether the first terminal device and the at least one second terminal device are allowed to accept the clock synchronization service provided by the access network device, information about whether the at least one second terminal device accepts that the application function network element requests the clock synchronization service for the at least one second terminal device, information about whether the at least one second terminal device accepts that the first terminal device requests the clock synchronization service for the at least one second terminal device, and information about whether the first terminal device has a capability of requesting the clock synchronization service for the at least one second terminal device.

According to a ninth aspect, a communication apparatus is provided. The apparatus includes a processing unit and a transceiver unit. The processing unit is configured to: obtain a first clock difference, where the first clock difference is a difference between a first clock of the apparatus and a second clock of an access network device. The transceiver unit is configured to send a second request message to a first network element, where the second request message is used to request the access network device to provide a clock synchronization service for at least one second terminal device, the second request message includes an identifier of the at least one second terminal device and a first error, the first error is an upper limit that is of an error of a clock synchronization service provided by the access network device for the second terminal device and that is required by each of the at least one second terminal device, and the first error is determined based on the first clock difference. The transceiver unit is further configured to receive a time service response message from the access network device.

With reference to the ninth aspect, in some implementations of the ninth aspect, the transceiver unit is specifically configured to send a third request message to the access network device, where the third request message is used to request clock information of the second clock. The transceiver unit is further configured to receive the clock information from the access network device. The processing unit is further configured to determine the first clock difference based on the clock information.

With reference to the ninth aspect, in some implementations of the ninth aspect, the transceiver unit is specifically configured to send a fourth request message to the access network device, where the fourth request message is used to request the first clock difference. The transceiver unit is specifically configured to receive the first clock difference from the access network device, where the first clock difference is determined based on the clock information of the second clock.

With reference to the ninth aspect, in some implementations of the ninth aspect, the clock information includes at least one of the following information: a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

With reference to the ninth aspect, in some implementations of the ninth aspect, the transceiver unit is further configured to send the first clock difference to a third terminal device, where the first clock difference is used for clock synchronization between the third terminal device and the at least one second terminal device.

With reference to the ninth aspect, in some implementations of the ninth aspect, the processing unit is further configured to determine whether time service statuses of a plurality of terminal devices change, where the plurality of terminal devices include the at least one second terminal device. The transceiver unit is specifically configured to send the second request message to the first network element when it is determined that a time service status of each of the at least one second terminal device changes.

With reference to the ninth aspect, in some implementations of the ninth aspect, the transceiver unit is further configured to receive first information from each of the plurality of terminal devices, where the first information is used to represent a time service status of the terminal device. It is determined, based on the first information, whether the time service statuses of the plurality of terminal devices change.

With reference to the ninth aspect, in some implementations of the ninth aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the ninth aspect, in some implementations of the ninth aspect, the apparatus and the at least one second terminal device belong to one terminal device group, and the processing unit is further configured to provide a time service for a terminal device in the terminal device group.

With reference to the ninth aspect, in some implementations of the ninth aspect, the second request message further includes an identifier of the terminal device group, and the identifier of the terminal device group indicates that clock synchronization needs to be implemented between terminal devices in the terminal device group.

According to a tenth aspect, a communication apparatus is provided. The apparatus includes a processing unit and a transceiver unit. The processing unit is configured to obtain a first clock difference, where the first clock difference is a difference between a first clock of the first terminal device and a second clock of an access network device. The transceiver unit is configured to send a second request message to a first network element, where the second request message is used to request the access network device to provide a clock synchronization service for at least one second terminal device, and the second request message includes an identifier of the at least one second terminal device. The processing unit is further configured to perform clock synchronization between the first terminal device and the at least one second terminal device based on the first clock difference.

With reference to the tenth aspect, in some implementations of the tenth aspect, the transceiver unit is specifically configured to send a third request message to the access network device, where the third request message is used to request clock information of the second clock. The transceiver unit is further configured to receive the clock information from the access network device. The processing unit is further configured to determine the first clock difference based on the clock information.

With reference to the tenth aspect, in some implementations of the tenth aspect, the transceiver unit is specifically configured to send a fourth request message to the access network device, where the fourth request message is used to request the first clock difference. The transceiver unit is further configured to receive the first clock difference from the access network device, where the first clock difference is determined based on the clock information of the second clock.

With reference to the tenth aspect, in some implementations of the tenth aspect, the clock information includes at least one of the following information: a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

With reference to the tenth aspect, in some implementations of the tenth aspect, the transceiver unit is specifically configured to receive first data from the at least one second terminal device, where the first data carries a first timestamp, and the first timestamp is determined based on the second clock. The processing unit is specifically configured to calibrate the first timestamp based on the first clock difference.

With reference to the tenth aspect, in some implementations of the tenth aspect, the transceiver unit is specifically configured to send the first time difference to the at least one second terminal device; and receive first data from the at least one second terminal device, where the first data carries a second timestamp, and the second timestamp is determined based on the second clock and the first clock difference.

With reference to the tenth aspect, in some implementations of the tenth aspect, the transceiver unit is further configured to send the first clock difference to a third terminal device, where the first clock difference is used for clock synchronization between the third terminal device and the at least one second terminal device.

With reference to the tenth aspect, in some implementations of the tenth aspect, the processing unit is further configured to determine whether time service statuses of a plurality of terminal devices change, where the plurality of terminal devices include the at least one second terminal device. The transceiver unit is specifically configured to send the second request message to the first network element when it is determined that a time service status of each of the at least one second terminal device changes.

With reference to the tenth aspect, in some implementations of the tenth aspect, the transceiver unit is specifically configured to receive first information from each of the plurality of terminal devices, where the first information is used to represent a time service status of the terminal device. The processing unit is specifically configured to determine, based on the first information, whether the time service statuses of the plurality of terminal devices change.

With reference to the tenth aspect, in some implementations of the tenth aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the tenth aspect, in some implementations of the tenth aspect, the apparatus and the at least one second terminal device belong to one terminal device group, and before the second request message is sent to the first network element, the processing unit is further configured to provide a time service for a terminal device in the terminal device group.

With reference to the tenth aspect, in some implementations of the tenth aspect, the second request message further includes an identifier of the terminal device group, and the identifier of the terminal device group indicates that clock synchronization needs to be implemented between terminal devices in the terminal device group.

According to an eleventh aspect, a communication apparatus is provided. The apparatus includes a transceiver unit. The transceiver unit is configured to receive a second request message from a first terminal device, where the second request message is used to request an access network device to provide a clock synchronization service for at least one second terminal device, and the second request message includes an identifier of the at least one second terminal device; or the second request message includes an identifier of the at least one second terminal device and a first error, the first error is an upper limit that is of an error of a time service provided by the access network device for the second terminal device and that is required by each of the at least one second terminal device, and the first error is determined based on a first clock difference. The transceiver unit is further configured to send a second time service indication to the access network device, where the second time service indication indicates to provide a clock synchronization service for the at least one second terminal device, the first clock difference is a difference between a first clock of the first terminal device and a second clock of the access network device, and the first clock difference is used for clock synchronization between the first terminal device and the at least one second terminal device.

With reference to the eleventh aspect, in some implementations of the eleventh aspect, the apparatus is an access and mobility management function network element or a clock sensitive communication and clock synchronization function network element. The transceiver unit is specifically configured to receive the second request message from the first terminal device by using the access network device; or the transceiver unit is specifically configured to receive the second request message from the first terminal device by using an application function network element.

With reference to the eleventh aspect, in some implementations of the eleventh aspect, the processing unit is further configured to obtain subscription information of the first terminal device and the at least one second terminal device; and determine, based on the subscription information, to send the second time service indication to the access network device.

With reference to the eleventh aspect, in some implementations of the eleventh aspect, the first terminal device and the at least one second terminal device belong to one terminal device group. The second request message further includes an identifier of the terminal device group. Subscription information of the terminal device group is obtained based on the identifier of the terminal device group; and the second time service indication is sent to the access network device based on the subscription information of the terminal device group.

With reference to the eleventh aspect, in some implementations of the eleventh aspect, the subscription information includes at least one of the following: information about whether the first terminal device and the at least one second terminal device are allowed to accept the clock synchronization service provided by the access network device, information about whether the at least one second terminal device accepts that the application function network element requests the clock synchronization service for the at least one second terminal device, information about whether the at least one second terminal device accepts that the first terminal device requests the clock synchronization service for the at least one second terminal device, and information about whether the first terminal device has a capability of requesting the clock synchronization service for the at least one second terminal device.

With reference to the eleventh aspect, in some implementations of the eleventh aspect, before the second request message is received from the first terminal device, the transceiver unit is further configured to send sixth indication information to the access network device, where the sixth indication information indicates to send clock information of the second clock to the first terminal device, and the clock information is used to determine the first clock difference.

With reference to the eleventh aspect, in some implementations of the eleventh aspect, the clock information includes at least one of the following information: a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

According to a twelfth aspect, a communication apparatus is provided. The communication apparatus includes a transceiver unit. The transceiver unit is configured to send a third time service indication to a third terminal device. The apparatus is configured to provide a clock synchronization service for the third terminal device, where the third time service indication indicates the third terminal device to provide a time service for at least one second terminal device, and the third time service indication carries an identifier of the at least one second terminal device. The transceiver unit is further configured to receive a time service response from the third terminal device.

With reference to the twelfth aspect, in some implementations of the twelfth aspect, the apparatus further includes a processing unit. The processing unit is configured to determine whether time service statuses of a plurality of terminal devices change, where the plurality of terminal devices include the third terminal device and the at least one second terminal device. The transceiver unit is specifically configured to send the third time service indication to the third terminal device when it is determined that a time service status of each of the at least one second terminal device changes.

With reference to the twelfth aspect, in some implementations of the twelfth aspect, the transceiver unit is specifically configured to receive first information from each of the plurality of terminal devices, where the first information is used to represent a time service status of the terminal device. The processing unit is specifically configured to determine, based on the first information, whether the time service statuses of the plurality of terminal devices change.

With reference to the twelfth aspect, in some implementations of the twelfth aspect, the first information includes at least one of the following information: first distance, second indication information, third indication information, fourth indication information, fifth indication information, and first signal strength, where the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

With reference to the twelfth aspect, in some implementations of the twelfth aspect, the apparatus, the third terminal device, and the at least one second terminal device belong to one terminal device group. Before the third time service indication is sent to the third terminal device, the processing unit is further configured to provide a time service for a terminal device in the terminal device group.

According to a thirteenth aspect, a communication apparatus is provided, and includes a processor. The processor is coupled to a memory, and may be configured to execute instructions in the memory, to implement the method in the first aspect or any possible implementation of the first aspect, implement the method in the third aspect or any possible implementation of the third aspect, implement the method in the fourth aspect or any possible implementation of the fourth aspect, or implement the method in the sixth aspect or any possible implementation of the sixth aspect. Optionally, the communication apparatus further includes the memory. Optionally, the communication apparatus further includes a communication interface, and the processor is coupled to the communication interface.

In an implementation, the communication apparatus is a first terminal device. When the communication apparatus is the first terminal device, the communication interface may be a transceiver or an input/output interface.

In another implementation, the communication apparatus is a chip configured in the first terminal device. When the communication apparatus is the chip configured in the first terminal device, the communication interface may be the input/output interface.

Optionally, the transceiver may be a transceiver circuit. Optionally, the input/output interface may be an input/output circuit.

According to a fourteenth aspect, a communication apparatus is provided, and includes a processor. The processor is coupled to a memory, and may be configured to execute instructions in the memory, to implement the method in the second aspect or any possible implementation of the second aspect, or implement the method in the fifth aspect or any possible implementation of the fifth aspect. Optionally, the communication apparatus further includes the memory. Optionally, the communication apparatus further includes a communication interface, and the processor is coupled to the communication interface.

In an implementation, the communication apparatus is a first network element. When the communication apparatus is the first network element, the communication interface may be a transceiver or an input/output interface.

In another implementation, the communication apparatus is a chip configured in the first network element. When the communication apparatus is the chip configured in the first network element, the communication interface may be an input/output interface.

Optionally, the transceiver may be a transceiver circuit. Optionally, the input/output interface may be an input/output circuit.

According to a fifteenth aspect, a processor is provided, and includes an input circuit, an output circuit, and a processing circuit. The processing circuit is configured to receive a signal by using the input circuit, and transmit a signal by using the output circuit, so that the processor performs the method in any possible implementation of the first aspect to the sixth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a sixteenth aspect, a processing apparatus is provided, and includes a processor and a memory. The processor is configured to read instructions stored in the memory, receive a signal by using a receiver, and transmit a signal by using a transmitter, to perform the method in any possible implementation of the first aspect to the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus according to the sixteenth aspect may be one or more chips. The processor in the processing apparatus may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a seventeenth aspect, a computer program product is provided, where the computer program product includes: a computer program (which may also be referred to as code or an instruction). When the computer program is run, a computer is enabled to perform the method in any possible implementations of the first aspect to the sixth aspect.

According to an eighteenth aspect, a computer-readable storage medium is provided. The computer-readable storage medium stores a computer program (which may also be referred to as code or instructions). When the computer program is run on a computer, the method according to any possible implementation of the first aspect to the sixth aspect is implemented.

According to a nineteenth aspect, a communication system is provided, and includes the foregoing first network element and the foregoing first terminal device.

Optionally, the system further includes at least one second terminal device and/or a third terminal device.

Optionally, the system further includes an access and mobility management function network element and/or a clock sensitive communication and clock synchronization function network element.

### BRIEF DESCRIPTION OF DRAWINGS

FIG. 1 is a diagram of an architecture of a communication system applicable to this application;
FIG. 2 is a diagram of a service-oriented architecture applicable to this application;
FIG. 3 is a schematic flowchart of a clock synchronization method according to this application;
FIG. 4 is a schematic flowchart of another clock synchronization method according to this application;
FIG. 5 is a schematic flowchart of another clock synchronization method according to this application;
FIG. 6 is a schematic flowchart of another clock synchronization method according to this application;
FIG. 7A and FIG. 7B are a schematic flowchart of another clock synchronization method according to this application;
FIG. 8A, FIG. 8B, and FIG. 8C are a schematic flowchart of another clock synchronization method according to this application;
FIG. 9A and FIG. 9B are a schematic flowchart of another clock synchronization method according to this application;
FIG. 10 is a schematic flowchart of another clock synchronization method according to this application;
FIG. 11 is a diagram of a communication apparatus according to an embodiment of this application;
FIG. 12 is a block diagram of a communication device according to an embodiment of this application; and
FIG. 13 is a diagram of a chip system according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The technical solutions provided in this application may be further applied to a future communication system, for example, a 6th generation mobile communication system. This is not limited in this application.

Usually, a conventional communication system supports a limited quantity of connections, and the connections are easy to implement. However, as communication technologies develop, a mobile communication system not only supports conventional communication, but also supports, for example, device to device (device to device, D2D) communication, machine to machine (machine to machine, M2M) communication, machine-type communication (machine-type communication, MTC), and vehicle to everything (vehicle to everything, V2X) communication (which may also be referred to as Internet of vehicles communication) such as vehicle to vehicle (vehicle to vehicle, V2V) communication (which may also be referred to as vehicle to vehicle communication), vehicle to infrastructure (vehicle to infrastructure, V2I) communication (which may also be referred to as vehicle to infrastructure communication), vehicle to pedestrian (vehicle to pedestrian, V2P) communication (which may also be referred to as vehicle to person communication), and vehicle to network (vehicle to network, V2N) communication (which may also be referred to as vehicle to network communication).

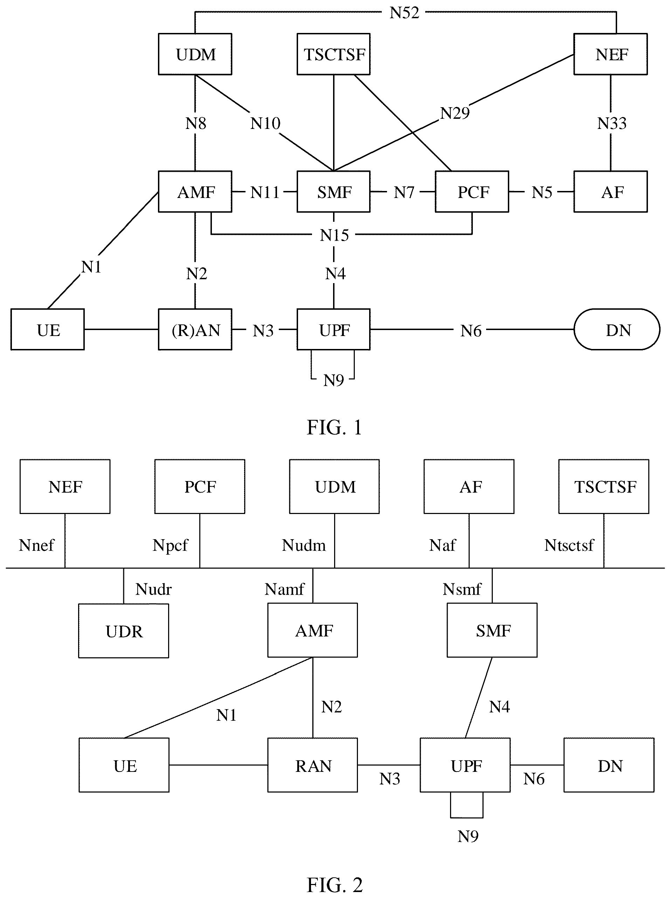

FIG. 1 shows an example of an architecture of a communication system applicable to an embodiment of this application. The following briefly describes devices shown in FIG. 1.
1. A user equipment (user equipment, UE), also referred to as a terminal device, is a device that provides voice/data connectivity for a user, for example, a handheld device or a vehicle-mounted device with a wireless connection function. Currently, some examples of terminals may include a mobile phone (mobile phone), a tablet computer (pad), a computer (for example, a notebook computer or a palmtop computer) having a wireless transceiver function, a mobile Internet device (mobile Internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved PLMN.

The wearable device may also be referred to as a wearable intelligent device, and is a general term for wearable devices, such as glasses, gloves, watches, clothes, and shoes, that are developed through applying wearable technologies to intelligent designs of daily wear. The wearable device is a portable device that can be directly worn on the body or integrated into clothes or an accessory of a user. The wearable device is not only a hardware device, and can implement powerful functions through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device may alternatively be a terminal device in an Internet of things (Internet of things, IoT) system. The IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

2. An access network (access network, AN) is used to provide a network access function for an authorized user in a specific area, and can use transmission tunnels with different quality based on user levels, service requirements, and the like. The access network may be an access network using different access technologies. Conventional access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access technology used in a 5G system).

An access network that implements an access network function based on a wireless communication technology may be referred to as a radio access network (radio access network, RAN). The radio access network can manage radio resources, provide an access service for a terminal, and further complete forwarding of a control signal and user data between a terminal and a core network.

The radio access network device may be, for example, a base station (NodeB), an evolved NodeB (evolved NodeB, eNB or eNodeB), a next generation node base station (next generation Node Base station, gNB) in a 5G mobile communication system, a base station in a future mobile communication system, an access point (access point, AP) in a Wi-Fi wireless hotspot system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology used by the radio access network device and a specific device form are not limited in embodiments of this application.

In NR, functions of a base station are divided into two parts, which is referred to as central unit (central unit, CU)-distributed unit (distributed unit, DU) separation. From a perspective of a protocol stack, a CU includes an RRC layer and a PDCP layer of an LTE base station, and a DU includes a radio link control (radio link control, RLC) layer, a media access control (media access control, MAC) layer, and a physical (physical, PHY) layer of the LTE base station. In common 5G base station deployment, the CU and the DU may be physically connected through an optical fiber, and logically there is a specially defined F1 interface used for communication between the CU and the DU. From a perspective of a function, the CU is mainly responsible for radio resource control and configuration, inter-cell mobility management, bearer management, and the like. The DU is mainly responsible for scheduling and physical signal generation and sending.

The base station may be a macro base station, a micro base station, a pico base station, a small cell, a relay station, a balloon station, or the like.

(3) An access management network element is a core network element, and is mainly responsible for signaling processing, for example, functions such as access control, mobility management, attachment and detachment, and gateway selection.

In a 5G communication system, the access management network element may be an access and mobility management function (access and mobility management function, AMF) network element. When providing a service for a session of the terminal device, the AMF network element provides a control plane storage resource for the session, to store a session identifier and a session management function (session management function, SMF) network element identifier associated with the session identifier. In addition, the AMF network element is further responsible for transferring a user policy between the terminal device and a policy control function (policy control function, PCF).

In a future communication system, the access management network element may still be the AMF network element, or may have another name. This is not limited in this application.

In the 5G communication system, a user plane function network element may be a UPF network element. In the future communication system, the user plane function network element may still be the UPF network element, or may have another name. This is not limited in this application.

4. A unified data management (unified data management, UDM) network element is mainly configured to manage and control user data, for example, manage subscription information, including obtaining subscription information from a unified data repository (unified data repository, UDR) and providing the subscription information for another network element (for example, an AMF); generating an authentication credential of the 3rd generation partnership project (3rd generation partnership project, 3GPP) for a terminal device; registering and maintaining a network element currently serving the terminal device, for example, an AMF currently serving the terminal device (namely, a serving AMF); and being responsible for notifying a corresponding network element when subscription data is modified.

5. A network exposure function (network exposure function, NEF) network element exposes services and capabilities of a 3GPP network function to an application function (application function, AF), and also enables the AF to provide information for the 3GPP network function.

6. An AF interacts with a core network element to provide some services, for example, interacts with a PCF to perform service policy control, interacts with an NEF to obtain some network capability information or provide some application information for a network, and provides some data network access point information for the PCF to generate routing information of a corresponding data service.

7. A time sensitive communication and time synchronization function (time sensitive communication and time synchronization function, TSCTSF) network element implements a capability of deterministic forwarding management in a 5G communication system. For a definition and a function of the TSCTSF network element, refer to definitions in 3GPP release 17 (release 17, R17).

The communication system shown in FIG. 1 may further include one or more of the following network elements: a session management function (session management function, SMF) network element, a user plane function (user plane function, UPF) network element, a data network (data network, DN) network element, a PCF network element, and the like.

It should be noted that the foregoing "network element" may also be referred to as an entity, a device, an apparatus, a module, or the like. This is not particularly limited in this application. In addition, in this application, for ease of understanding and description, the description of the "network element" is omitted in some descriptions. For example, the TSCTSF network element is briefly referred to as a TSCTSF. In this case, the "TSCTSF" should be understood as a TSCTSF network element or a TSCTSF entity. Descriptions of same or similar cases are omitted below.

FIG. 2 is a diagram of a service-oriented network architecture. Herein, Nnef, Nnrf, Nnssf, Naf, Npcf, Nudr, Nudm, Nausf, Namf, and Nsmf are service-oriented interfaces respectively provided by an NEF, an NRF, an NSSF, an AF, a PCF, a UDR, a UDM, an AUSF, an AMF, and an SMF to invoke corresponding service-oriented operations. N1, N2, N3, N4, and N6 are interface sequence numbers.

In FIG. 1 and FIG. 2, names and functions of the interfaces between the network elements are as follows:
(1) N1 is an interface between the AMF and a terminal device, and may be configured to transfer a QoS control rule or the like to the terminal.
(2) N2 is an interface between the AMF and a RAN, and may be configured to transfer radio bearer control information or the like from a core network side to a RAN side.
(3) N3 is an interface between the RAN and the UPF, and is mainly configured to transfer uplink and downlink user plane data between the RAN and the UPF.
(4) N4 is an interface between the SMF and the UPF, and may be configured to transfer information between a control plane and a user plane, including delivering a forwarding rule, a QoS control rule, a traffic statistics rule, or the like from the control plane to the user plane, and reporting information about the user plane.
(5) N5 is an interface between the AF and the PCF, and may be configured to deliver an application service request and report a network event.
(6) N6 is an interface between the UPF and the DN, and is configured to transfer uplink and downlink user data flows between the UPF and the DN.
(7) N7 is an interface between the PCF and the SMF, and may be configured to deliver control policies at a protocol data unit (protocol data unit, PDU) session granularity and a service data flow granularity.
(8) N8 is an interface between the AMF and the UDM, and may be used by the AMF to obtain, from the UDM, access and mobility management-related subscription data and authentication data, used by the AMF to register current mobility management-related information of the terminal with the UDM, and the like.
(9) N9 is a user plane interface between UPFs, and is configured to transfer uplink and downlink user data flows between the UPFs.
(10) N10 is an interface between the SMF and the UDM, and may be used by the SMF to obtain session management-related subscription data from the UDM, used by the SMF to register current session-related information of the terminal with the UDM, and the like.
(11) N11 is an interface between the SMF and the AMF, and may be configured to transfer PDU session tunnel information between the RAN and the UPF, transfer a control message sent to the terminal, transfer radio resource control information sent to the RAN, and the like.
(12) N15 is an interface between the PCF and the AMF, and may be configured to deliver a terminal policy and an access control-related policy.
(13) Xn is an interface between two RANs, and may be used for signaling exchange between two base stations.
(14) Uu is an interface between the terminal device and the RAN.

The foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be a functional module in one device. This is not specifically limited in embodiments of this application.

It should be understood that FIG. 2 is merely a diagram of an example of a network service-oriented architecture, and a diagram of a network service-oriented architecture applicable to embodiments of this application is not limited thereto. Any network service-oriented architecture that can implement functions of the foregoing network elements is applicable to embodiments of this application.

For example, in some network architectures, network function entities such as an AMF, an SMF, a PCF, a TSCTSF, and a UDR are all referred to as network function (network function, NF) network elements. Alternatively, in some other network architectures, a set of network elements such as an AMF, an SMF, a PCF, a TSCTSF, and a UDM may be referred to as a control plane function (control Plane function, CPF) network element.

It should be understood that FIG. 1 and FIG. 2 are merely examples of a network architecture, and a network architecture applicable to embodiments of this application is not limited thereto. Any network architecture that can implement functions of the foregoing network elements is applicable to embodiments of this application.

In this application, a 5G communication system is used as an example to describe embodiments of this application. However, the technical solutions of this application are not limited to the 5G system. When this solution is applied to an LTE system, a 5G system, or a future communication system, each network element in the solution may be replaced with another network element having a corresponding function. This is not limited in this application.

In a wireless communication system, terminal devices may directly communicate with each other without using a network device. A direct communication interface between terminal devices is referred to as a PC5 interface. The PC5 interface may also be used for D2D communication and V2X communication. For example, in D2D communication, a terminal device may be an intelligent robot. Data is directly transmitted between terminal devices without using a network, so that a communication delay can be effectively reduced.

The terminal device may communicate with a network device (for example, the RAN in FIG. 1) by using a communication interface (a Uu interface). In other words, the Uu interface is used for communication between the terminal device and a base station or a roadside unit, and the PC5 interface is used for sidelink communication between terminal devices. On the Uu interface, a link on which the terminal device sends data to the base station may be referred to as an uplink (uplink), and a link on which the terminal device receives data sent by the base station may be referred to as a downlink (downlink). A link for transmitting data between terminal devices on the PC5 interface may be referred to as a sidelink (sidelink) or a side link.

On the Uu interface, data and radio resource control (radio resource control, RRC) signaling are communicated between the terminal device and the base station by using a radio bearer. A radio bearer used for data transmission is referred to as a data radio bearer (data radio bearer, DRB), and a bearer used for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. An RLC bearer includes an RLC entity and a corresponding logical channel (Logical Channel, LCH). A configuration of the radio bearer is configurations of a PDCP entity, an RLC entity, and a logical channel of the radio bearer. The configuration of the radio bearer needs to satisfy a quality of service (quality of service, QoS) requirement of a service transmitted by using the radio bearer. On the Uu interface, the radio bearer is configured by the network device for the terminal.

On the PC5 interface, data and RRC signaling also need to be communicated between terminal devices by using a radio bearer. The radio bearer on the PC5 interface may be referred to as a sidelink radio bearer (sidelink radio bearer, SL RB). In a long term evolution (long term evolution, LTE) V2X system, the radio bearer on the PC5 interface is established by a transmitting-end terminal and a receiving-end terminal separately, and a configuration of the radio bearer is pre-defined in a standard or is determined by the transmitting-end terminal and the receiving-end terminal.

Generally, all tasks are based on a clock reference in fields such as communication and industrial control. Therefore, accurate clock synchronization is a basis. For example, in a scenario in which a plurality of robots (UE) collaboratively collect measurement data, a primary robot may perform data analysis based on data collected from another robot. This requires real-time and timely data. In other words, clock synchronization needs to be achieved among robots in one working group (working group).

Currently, to obtain clock information of a 5G system, a UE needs to send a time service request to a base station, and the base station forwards the time service request to a TSCTSF. Further, the TSCTSF selects an appropriate clock based on the time service request to provide a time service for the UE. If a plurality of UEs in a D2D scenario all have a time service requirement, according to an existing solution, each of the plurality of UEs sends a time service request to a base station, and then a TSCTSF processes the time service requests one by one and selects a clock that satisfies a requirement of the time service request to provide a time service for each UE. Signaling overheads of an existing time service solution for UEs in groups are relatively large.

In view of this, an embodiment of this application provides a clock synchronization method, to implement clock synchronization at a group granularity and reduce signaling overheads.

To better understand embodiments of this application, the following describes some technical terms in this application.

### 1. Clock

The clock in this application may be a 5th generation communication system (5th generation system, 5GS) clock, a global navigation satellite system (global navigation satellite system, GNSS) clock, a time sensitive network (time sensitive network, TSN) clock, an internal clock of a device, or the like. There are a plurality of types of GNSS clocks, for example, a global positioning system (global positioning system, GPS), a global navigation satellite system (global navigation satellite system, GLONASS), a BeiDou navigation satellite system, or a Galileo navigation satellite system. There are a plurality of types of TSN clocks. For example, different types of clocks belong to different TSN domains.

### 2. Time service (time serving)

The time service may indicate to provide time information for another device or system according to a standard or a customized interface and protocol. Basic channels of the time service are a short wave, a television signal, a cable, a network, and the like. Time service accuracy ranges from nanoseconds (ns) to milliseconds (ms). An atomic clock, a satellite system, a network, a high-stability oscillator, or the like is mainly used as a time source.

In this application, one terminal device (for ease of description, referred to as a first terminal device) providing a time service for another terminal device (for ease of description, referred to as a second terminal device) may be understood as that the first terminal device serves as a clock source to indicate accurate time to the second terminal device. For example, a clock may be configured on the first terminal device, or the first terminal may be connected to a device configured with a primary clock, so that the first terminal can obtain time information of the primary clock. The first terminal device serving as a clock source may be understood as that the first terminal provides the time information of the primary clock for the outside.

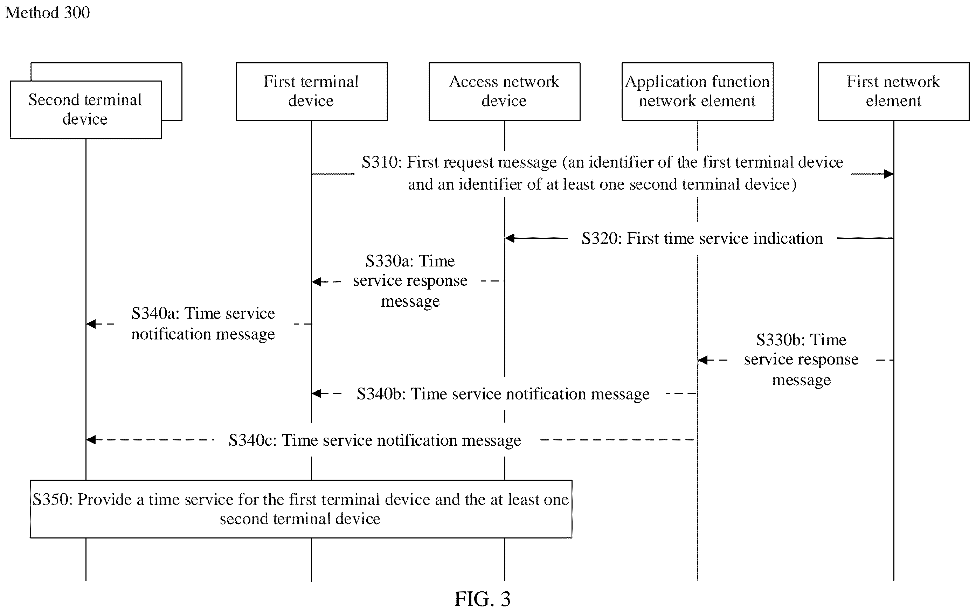

FIG. 3 is a schematic flowchart of clock synchronization 300 according to an embodiment of this application. The following describes in detail steps included in the method 300.

S310: A first terminal device sends a first request message to a first network element. Correspondingly, the first network element receives the first request message from the first terminal device.

The first request message is used to request to provide a clock synchronization service for the first terminal device and at least one second terminal device. In other words, the first request message is used to request a 5G system to provide a clock synchronization service for the first terminal device and the at least one second terminal device. The first request message may carry identifiers of the first terminal device and the at least one second terminal device.

The identifier of the terminal device may be any identifier that can be used to identify the terminal device. For example, the identifier of the terminal device may be one or more of the following: an international mobile subscriber identity (international mobile subscriber identity, IMSI), an international mobile equipment identity (international mobile equipment identity, IMEI), a subscription permanent identifier (subscription permanent identifier, SUPI), a generic public subscription identifier (generic public subscription identifier, GPSI), and an Internet protocol (Internet protocol, IP) quintuple.

Optionally, the first request message further includes time service error budgets (error budget) of the first terminal device and each of the at least one second terminal device. The time service error budget of the terminal device may be an upper limit that is of a time service error and that is required by the terminal device. For example, the time service error budget of the terminal device may be 10 milliseconds (ms), 1 ms, 1 microsecond (µs), or 1 nanosecond (ns).

Optionally, the first terminal device and the at least one second terminal device belong to one terminal device group (group). The first request message may further carry an identifier of the terminal device group (group ID). It should be understood that terminal devices belonging to the same terminal device group may have a same time service error budget or different time service error budgets.

In an example, the first network element is an access and mobility management function network element. Specifically, the first terminal device may send the first request message to the access and mobility management function network element by using an access network device. Alternatively, the first terminal device may directly send the first request message to the access and mobility management function network element by using a non-access stratum (non-access stratum, NAS) message.

In another example, the first network element is a clock sensitive communication and clock synchronization function network element. The first terminal device may send the first request message to the clock sensitive communication and clock synchronization function network element by using an application function network element.

Specifically, the first terminal device sending the first request message to the first network element may be: the first terminal device sends the first request message to the first network element when determining that a time service status of each of the at least one second terminal device changes. The change of the time service status of the second terminal device may affect time service accuracy of a time service provided by the first terminal device for the second terminal device. In other words, the time service provided by the first terminal device for the second terminal device may not satisfy the time service error budget of the second terminal device.

Before sending the first request message to the first network element, the first terminal device may send first indication information to a plurality of terminal devices. The first indication information indicates the plurality of terminal devices to report time service statuses. For example, the plurality of terminal devices and the first terminal device may belong to one terminal device group, and the plurality of terminal devices may include the at least one second terminal device.

Correspondingly, the first terminal device receives first information from each of the plurality of terminal devices. The first information may be used to represent a time service status of the terminal device. The first terminal device determines, based on the first information, that the time service status of each of the at least one second terminal device changes.

Optionally, the first terminal device may further subscribe to the first information of the terminal device in the terminal device group, and determine, based on the first information, whether the time service status of each of the at least one second terminal device changes; or the terminal device in the terminal device group may actively send the first information to the first terminal device when the time service status changes.

For example, the first information may include at least one of the following information: a first distance; second indication information, where the second indication information indicates whether the terminal device is powered on, powered off, or reset; third indication information, where the third indication information indicates whether the terminal device performs delay compensation; fourth indication information, where the fourth indication information indicates whether a time service of the first terminal device is received; fifth indication information, where the fifth indication information indicates a radio access technology (radio access technology, RAT) (for example, Uu interface access or sidelink access) supported by the second terminal; and first signal strength.

Any one of the plurality of terminal devices (a terminal device #1) is used as an example. The first distance may be a distance between the terminal device #1 and the first terminal device, or the first distance may be a distance between the terminal device #1 and another reference object (for example, an access network device to which the terminal device #1 belongs). For example, when the first distance is greater than or equal to a preset threshold, the first terminal device may determine that a time service status of the terminal device #1 changes.

Whether the terminal device #1 is powered on, powered off, or reset may be understood as whether the terminal device #1 is restarted. Because there is an uncontrollable channel delay jitter when the terminal device is powered on, powered off, or reset, when the terminal device #1 is powered on, powered off, or reset, the first terminal device may determine that the time service status of the terminal device #1 changes.

It may be determined whether the terminal device #1 performs delay compensation. Different compensation manners correspond to different time service accuracy. If the terminal device #1 performs delay compensation, the first terminal device may determine that the time service status of the terminal device #1 changes. When the terminal device #1 performs delay compensation, the third indication information may further indicate a compensation manner. For example, the compensation manner is a compensation manner based on a round-trip time (round trip latency, RTT) or a compensation manner based on a timing advance (timing advance, TA).

If the fourth indication information indicates that the terminal device #1 has not received a time service provided by the first terminal device, the first terminal device may determine that the time service status of the terminal device #1 changes.

The first signal strength may be strength of a signal sent between the terminal device #1 and the first terminal device. For example, if the first terminal device determines that the first signal strength is less than or equal to a preset threshold, the first terminal device may determine that the time service status of the terminal device #1 changes.

It may be understood that when the first information includes the plurality of pieces of information above, the terminal device may determine, based on one or more pieces of information in the plurality of pieces of information, whether the time service status of the terminal device #1 changes. This is not limited in this application.

Optionally, before the first terminal device sends the first request message to the first network element, the first terminal device provides a time service for the plurality of terminal devices.

For example, the first terminal device provides a time service for the plurality of terminal devices in a multicast or unicast manner, and the first terminal device may be a primary terminal device in the terminal device group. For example, the primary terminal device may be a terminal device configured to manage another terminal device in the terminal device group, and the primary terminal device may learn of a time service error budget of the another terminal device.

Before the group is created, the first terminal device and the plurality of terminal devices may form a group based on an instruction of a device administrator or an application control server. After the group is formed, the first terminal device and the plurality of terminal devices may exchange capability information of each other, to select the first terminal device. Alternatively, the first terminal device may be specified by a device administrator or an application control server. After the first terminal device is selected, to achieve clock synchronization of the terminal devices in the group, a clock on the first terminal device may be specified as a primary clock of a working domain (working domain) in the group, and another terminal device in the group needs to be synchronized with the clock of the first terminal device. For example, the first terminal device may provide a time service for another terminal in the group by using a sidelink, so that the another terminal device is synchronized with the primary clock of the first terminal device.

The capability information of the terminal device may include configured clock information of the terminal device, for example, clock accuracy (clock accuracy), clock frequency stability (frequency stability), clock quality (clock quality) information, coordinated universal time (coordinated universal time, UTC) traceability (UTC traceability), a clock status (clock state), a clock source (time source), a clock priority (priority), a radio access technology supported by the terminal device, a computing capability of the terminal device, and a battery capability of the terminal device.

It should be understood that, in this application, the first terminal requests the first network element to provide the clock synchronization service for the first terminal device and/or the at least one second terminal. The clock synchronization service may be, for example, access stratum clock synchronization, or clock synchronization based on the general precision time protocol (general precision time protocol, gPTP). This is not limited in this application. In the following embodiments, access stratum clock synchronization is used as an example for description. Providing an access stratum clock synchronization service for the first terminal device and/or the at least one second terminal device may also be understood as that an access network device provides a time service for the first terminal device and/or the at least one second terminal device.

S320: The first network element sends a first time service indication to an access network device. Correspondingly, the access network device receives the time service indication from the first network element.

The time service indication indicates the access network device to provide a time service for the first terminal device and the at least one second terminal device. The time service indication may include identifiers of the first terminal device and the at least one second terminal device. The time service indication may further include Uu interface time service error budgets of the first terminal device and the at least one second terminal device.

Optionally, before the first network element sends the time service indication to the access network device, the first network element may obtain subscription information of the first terminal device and the at least one second terminal device. The first network element sends the time service indication to the access network device based on the subscription information.

For example, the first network element may obtain the subscription information from a unified data management function network element.

The subscription information of the first terminal device may include at least one of the following: at least one time service error budget supported by the first terminal device, for example, the Uu interface time service error budget, and/or a total time service error budget; information about whether the first terminal device can request a time service for the at least one second terminal device, for example, the subscription information of the first terminal device may include a list of terminal devices for which the first terminal device can request a time service; whether the first terminal device supports the application function network element in requesting a time service for the first terminal device; and whether the first terminal device can receive clock information of an access stratum.

The subscription information of the second terminal device may include at least one of the following: at least one time service error budget supported by the second terminal device; whether the second terminal device supports receiving of time of the access stratum; and information about whether the second terminal device can accept that the first terminal device and/or the application function network element request/requests a time service for the second terminal device.

For example, the first network element sending the time service indication to the access network device based on the subscription information may include: sending the first time service indication to the access network device when the first terminal device and/or the at least one second terminal device satisfy/satisfies a first condition.

The first condition may include at least one of the following: the first terminal device and/or the at least one second terminal device can receive the clock information of the access stratum; the first terminal device can request a time service for the at least one second terminal device; the at least one second terminal device supports the first terminal device and/or the application function network element in requesting a time service for the at least one second terminal device; and the first terminal device supports the application function network element in requesting a time service for the first terminal device.

Optionally, when the first request message carries the group ID of the terminal device group, the first network element may further obtain, by using a terminal device group as a granularity, subscription information corresponding to the group ID, and determine, based on the subscription information, whether the first terminal device and/or the at least one second terminal device satisfy/satisfies the first condition.

For example, the subscription information of the terminal device group may include at least one of the following: the primary terminal device and a secondary terminal device in the terminal device group; information about whether the primary terminal device in the terminal device group can request a time service for the secondary terminal device; information about whether a terminal device in the terminal device group supports the application function network element in requesting a time service for the terminal device; at least one time service error budget supported by each terminal device in the terminal device group, for example, the Uu interface time service error budget and/or the total time service error budget; and information about whether a terminal device in the terminal device group can receive the clock information of the access stratum.

It should be understood that the subscription information of the terminal device group may be at a granularity of a terminal device group, or may be at a granularity of a group member in the terminal device group. For example, the time service error budget supported by the terminal device in the terminal device group may be at the granularity of a terminal device group, that is, all terminal devices in the terminal device group support the time service error budget. Alternatively, the time service error budget may be at the granularity of a terminal device in the terminal device group, that is, different terminal devices may support different time service error budgets. This is not limited in this application.

Optionally, the method further includes: notifying the first terminal device and the at least one second terminal device that a time service manner changes, in other words, notifying the first terminal device and the at least one second terminal device that the access network device provides a time service for the first terminal device and the at least one second terminal device.

When the first network element includes different network elements (an access and mobility management function network element or a clock sensitive communication and clock synchronization function network element), notifying that the time service manner changes may include two cases.

Case 1: The first network element is an access and mobility management function network element.

Notifying that the time service manner changes may include S330a and S340a.

S330a: The access network device may send a time service response message to the first terminal device, and correspondingly, the first terminal device receives the time service response message from the access network device.

Specifically, after receiving the first time service indication from the access and mobility management function network element, the access network device sends the time service response message to the first terminal device.

The time service response message may be a response to the first request message in S210. In other words, the access network device responds to the request message for requesting to provide the clock synchronization service for the first terminal device and the at least one second terminal device. In other words, the access network device indicates, by using the time service response message, that the access network device can provide a time service for the first terminal device and the at least one second terminal device.

S340a: The first terminal device sends a time service notification message to the at least one second terminal device.

The time service notification message is used to notify switching of a time service method. For example, the time service notification message may be used to notify the at least one second terminal device that a first time service manner is to be switched to a second time service manner, where the first time service manner is a manner in which the first terminal device provides a time service for the at least one second terminal device, and the second time service manner is a manner in which the access network device provides a time service for the at least one second terminal device; or the time service notification message is used to notify the at least one second terminal device that the access network device is to provide a time service for the at least one second terminal device. The time service notification message may carry an identifier of the access network device.

Specifically, after receiving the time service response message from the access network device, the first terminal device may send the time service notification message to the at least one second terminal device. Therefore, after receiving the time service notification message, the second terminal device may accept, based on the time service notification message, a time service provided by the access network device.

Case 2: The first network element is a clock sensitive communication and clock synchronization function network element.

Notifying that the time service manner changes may include S330b, S340b, and S340c.

S330b: The first network element sends a time service response message to the application function network element. Correspondingly, the application function network element receives the time service response message from the first network element.

Specifically, the first network element receives the first request message from the application function network element, and sends the time service response message to the application function network element. The time service response message may be a response to the first request message in S210.

S340b and S340c: The application function network element sends a time service notification message to each of the first terminal device and the at least one second terminal device.

The time service notification message is used to notify switching of a time service method. Alternatively, the time service notification message is used to notify that the access network device is to provide a time service for the first terminal device and the at least one second terminal device.

Specifically, after receiving the time service response message from the first network element, the application function network element sends the time service notification message to each of the first terminal device and the at least one second terminal device by using an application layer. Therefore, after receiving the time service notification message, the first terminal device and the at least one second terminal device may accept, based on the time service notification message, a time service provided by the access network device.

After the access network device receives the first time service indication from the first network element, the method further includes:
S350: The access network device provides a time service for the first terminal device and the at least one second terminal device.

For example, the access network device may determine a time service manner based on the Uu interface time service error budget in the first time service indication, and provide a time service for the first terminal device and the at least one second terminal device based on the time service method.

For example, the access network device may provide a time service for the first terminal device and the at least one second terminal device based on a time service manner based on a round-trip time (round trip latency, RTT) or a time service manner based on a timing advance (timing advance, TA). This is not limited in this application.

Based on the method provided in this embodiment of this application, a request message used to request to provide the clock synchronization service for the first terminal device and the at least one second terminal device is sent to the first network element, so that the access network device can provide a time service for the first terminal device and the at least one second terminal device, thereby implementing clock synchronization between the first terminal device and the at least one second terminal device.

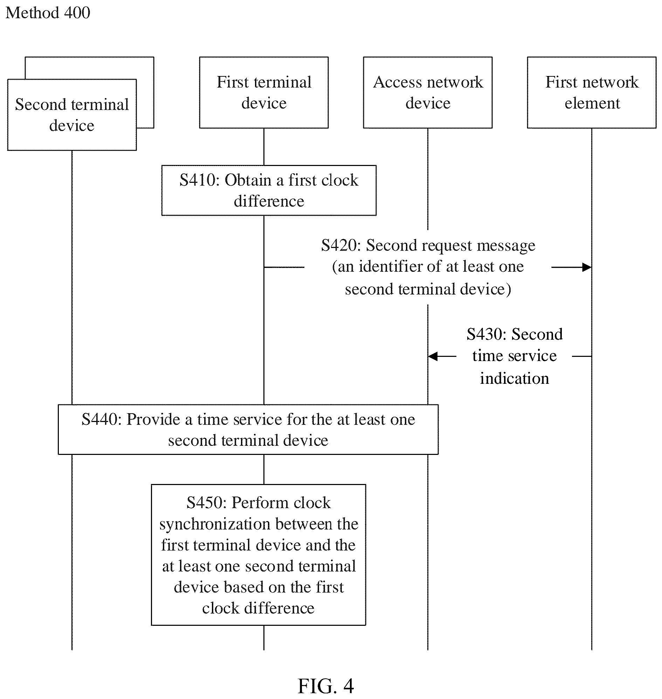

FIG. 4 is a schematic flowchart of another time synchronization method 400 according to an embodiment of this application. For example, the method shown in FIG. 4 may be applied to a scenario in which stability is required for a clock of a first terminal device, that is, implementing clock synchronization between the first terminal device and at least one second terminal device when the clock of the first terminal device does not change. Alternatively, the method shown in FIG. 4 may be applied to a scenario in which a time service cannot be provided between terminal devices by using a communication interface (for example, there is no PC5 interface or time service accuracy cannot satisfy a requirement). The following describes in detail steps included in the method 400.

S410: The first terminal device obtains a first clock difference, where the first clock difference is a difference between a first clock of the first terminal device and a second clock of an access network device.

In a possible implementation, the first terminal device obtains clock information of the access network device, and the first terminal device determines the first clock difference based on the clock information of the access network device.

For example, the first terminal device sends a third request message to the access network device, where the third request message may be used to request clock information of the access network device. The first terminal device receives the clock information from the access network device, and determines the first clock difference based on the clock information.

The clock information of the access network device may include at least one of the following: clock uncertainty (uncertainty) of the second clock, clock quality (clock quality) of the second clock, coordinated universal time (coordinated universal time, UTC) traceability (UTC traceability) of the second clock, clock accuracy (clock accuracy) of the second clock, a clock synchronization report of the second clock, frequency stability (frequency stability) of the second clock, and a clock status (lock state) of the second clock.

Optionally, after the access network device receives the third request message from the first terminal device, the access network device may further forward the third request message to a first network element, so that the first network element determines whether the first terminal device can receive the clock information of the access network device. For example, the first network element may be an access and mobility management function network element. The first network element may obtain subscription information of the first terminal device from a unified data management function network element, and determine, based on the subscription information, whether the first terminal device can receive the clock information of the access network device.

In another possible implementation, the first terminal device obtains the first clock difference from the access network device. In other words, the first terminal device obtains, from the access network device, the first clock difference determined by the access network device.

For example, the first terminal device sends a fourth request message to the access network device, where the fourth request message is used to request the first clock difference, and the fourth request message may carry information about the first clock. A specific method in which the access network device determines the first clock difference based on the clock information of the access network device and the information about the first clock is as follows: The access network device may record round-trip times t1, t2, t3, and t4 and calculate a time difference offset between the first terminal device and the access network device, by using an RTT-based time service method; and the access network device sends the first clock difference to the first terminal device. For the clock information of the access network device, refer to the description in the first possible implementation.

In still another possible implementation, the first terminal device may further request the access network device to provide a time service through broadcasting, and obtain the clock information from a broadcast message of the access network device.

Optionally, before the first terminal device obtains the first clock difference, the first terminal device may determine whether time service statuses of a plurality of terminal devices change. The plurality of terminal devices and the first terminal device may belong to one terminal device group. The first terminal device obtains the first clock difference when the first terminal device determines that a time service status of each of the at least one second terminal device changes. The plurality of terminal devices include the at least one second terminal device.

For a process in which the first terminal device determines whether the time service statuses of the plurality of terminal devices change, refer to the description in S310. Details are not described again.

Optionally, before the first terminal device obtains the first clock difference, the first terminal device provides a time service for the plurality of terminal devices. For example, the first terminal device provides a time service for the plurality of terminal devices in a multicast/groupcast or unicast manner, and the first terminal device may be a primary terminal device in the terminal device group. If the time service manner implement through unicast is used, the first terminal device provides a time service in the unicast manner for a plurality of terminal devices that need to achieve clock synchronization with the first device. If the time service manner implemented through multicast/groupcast, the first terminal device provides a time service in the multicast or groupcast manner for a plurality of terminal devices that need to achieve clock synchronization with the first device.

S420: The first terminal device sends a second request message to the first network element. Correspondingly, the first network element receives the second request message from the first terminal device.

The second request message is used to request the access network device to provide a clock synchronization service for the at least one second terminal device. The first request message may carry an identifier of the at least one second terminal device.

In an example, the first network element is an access and mobility management function network element. Specifically, the first terminal device may send the second request message to the access and mobility management function network element by using an access network device. Alternatively, the first terminal device may directly send the second request message to the access and mobility management function network element by using a non-access stratum (non-access stratum, NAS) message.

It may be understood that, in this implementation, the second request message and the third request message may be the same message, or the second request message may carry the third request message, or the second request message and the third request message may be simultaneously sent.

In another example, the first network element is a clock sensitive communication and clock synchronization function network element. Specifically, the first terminal device may send the second request message to the clock sensitive communication and clock synchronization function network element by using an application function network element.

Optionally, the method may further include the following steps.

S430: The first network element sends a second time service indication to the access network device. Correspondingly, the access network device receives the second time service indication from the first network element.

Specifically, after the first network element receives the second request message from the first terminal device, the first network element sends the second time service indication to the access network device. The second time service indication indicates the access network device to provide a time service for the at least one second terminal device. The second time service indication may carry the identifier of the at least one second terminal device. Optionally, the second time service indication carries a Uu time service error budget of the at least one second terminal device.

Optionally, before the first network element sends the second time service indication to the access network device, the first network element may obtain subscription information of the at least one second terminal device. The first network element sends the time service indication to the access network device based on the subscription information.

For the subscription information of the second terminal device, refer to the description in S320. Details are not described again.

Optionally, the method further includes: notifying the at least one second terminal device that a time service manner changes, in other words, notifying the at least one second terminal device that the access network device provides a time service for the at least one second terminal device. For this step, refer to the description in S320.

After the access network device receives the second time service indication from the first network element, the method further includes S440 in which the access network device provides a time service for the at least one second terminal device.

For this step, refer to the description in S350. Details are not described again.

S450: The first terminal device performs clock synchronization between the first terminal device and the at least one second terminal device based on the first clock difference.

In a possible implementation, the first terminal device receives data from the at least one second terminal device, where the data carries a first timestamp; and the first terminal device calibrates the first timestamp based on the first clock difference, to implement clock synchronization between the first terminal device and the at least one second terminal device.

It may be understood that the first timestamp is a timestamp determined based on a clock of the second terminal device, and a time service is provided by the access network device for the second terminal device. Therefore, the first terminal device may calibrate data from the second terminal device based on the first clock difference, to implement clock synchronization between the first terminal device and the at least one second terminal device.

In another possible implementation, the first terminal device sends the first clock difference to the at least one second terminal device, and the first terminal device receives data from the at least one second terminal device. The data carries a second timestamp. The second timestamp may be determined based on the first time difference and a value of the second clock of the access network device.

For example, after receiving the first clock difference from the first terminal device, the at least one second terminal device may adjust the clock of the at least one second terminal device based on the first clock difference, and determine the second timestamp based on the adjusted clock. It may be understood that before the at least one second terminal device adjusts the clock of the at least one second terminal device, the at least one second terminal device is synchronized with the second clock of the access network device.

Optionally, the first terminal device may further send the first clock difference to another terminal device (that is, a terminal device other than the at least one second terminal device, denoted as a third terminal device) in the terminal device group, so that the third terminal device implements clock synchronization with the at least one second terminal device based on the first clock difference.

For clock synchronization between the third terminal device and the at least one second terminal device, refer to clock synchronization between the first terminal device and the at least one second terminal device. Details are not described again.

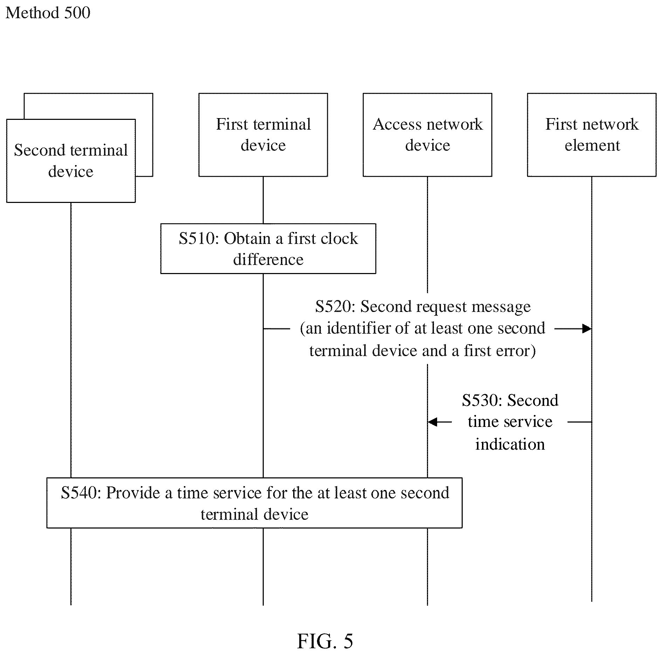

FIG. 5 is a schematic flowchart of another time synchronization method 500 according to an embodiment of this application. The method 500 may also be applied to a scenario in which stability is required for a clock of a first terminal device, that is, implementing clock synchronization between the first terminal device and at least one second terminal device when the clock of the first terminal device does not change. The following describes in detail steps included in the method 500.

S510: The first terminal device obtains a first clock difference, where the first clock difference is a difference between a first clock of the first terminal device and a second clock of an access network device.

For the first clock difference and a specific manner in which the first terminal device obtains the first clock difference, refer to the description in S410.

Optionally, before the first terminal device obtains the first clock difference, the first terminal device may determine whether time service statuses of a plurality of terminal devices change. The plurality of terminal devices and the first terminal device may belong to one terminal device group. The first terminal device may obtain the first clock difference when the first terminal device determines that a time service status of each of the at least one second terminal device changes. The plurality of terminal devices include the at least one second terminal device.

For a process in which the first terminal device determines whether the time service statuses of the plurality of terminal devices change, refer to the description in S310. Details are not described again.

Optionally, before the first terminal device obtains the first clock difference, the first terminal device provides a time service for the plurality of terminal devices.

S520: The first terminal device sends a second request message to a first network element. Correspondingly, the first network element receives the second request message from the first terminal device.

The second request message is used to request the access network device to provide a clock synchronization service for the at least one second terminal device. The first request message may carry an identifier of the at least one second terminal device and a first error. The first error may be an upper limit that is of an error of a time service provided by the access network device for the second terminal device and that is required by each of the at least one second terminal device.

The first error is determined based on the first clock difference. For example, one second terminal device is used as an example. The first terminal device may determine the first error based on a second error of the second terminal device and the first clock difference. The second error is an upper limit that is of a total time service error and that is required by the second terminal device. For example, if the second error is 1 microsecond, and the first clock difference is 100 nanoseconds, the first terminal device may determine that the first error is 900 nanoseconds.

For a specific implementation in which the first terminal device sends the second request message to the first network element, refer to the description in S420.

S530: The first network element sends a second time service indication to the access network device. Correspondingly, the access network device receives the second time service indication from the first network element.

The second time service indication indicates the access network device to provide a time service for the at least one second terminal device. The second time service indication may carry the identifier of the at least one second terminal device. The second time service indication further carries a third error. The third error is obtained by the first network element based on the first error, a clock synchronization manner of the second terminal device, and a time service error between a network side and a device side. For example, after receiving the first error, the first network element may remove the time service error between the network side and the device side from the first error based on the clock synchronization manner, to obtain the third error. The access network device may determine a time service method for the second terminal device based on the third error. The third error may also be represented by a Uu error budget.

Before the first network element sends the second time service indication to the access network device, the first network element may obtain subscription information of the at least one second terminal device. The first network element sends the time service indication to the access network device based on the subscription information.

For the subscription information of the second terminal device, refer to the description in S320. Details are not described again.

Optionally, the method further includes: notifying the at least one second terminal device that a time service manner changes, in other words, notifying the at least one second terminal device that the access network device provides a time service for the at least one second terminal device. For this step, refer to the description in S320.

After the access network device receives the second time service indication from the first network element, the method further includes:
S540: The access network device provides a time service for the at least one second terminal device.

For example, the access network device determines a time service manner based on the first error, and provides a time service for the at least one second terminal device based on the time service method.

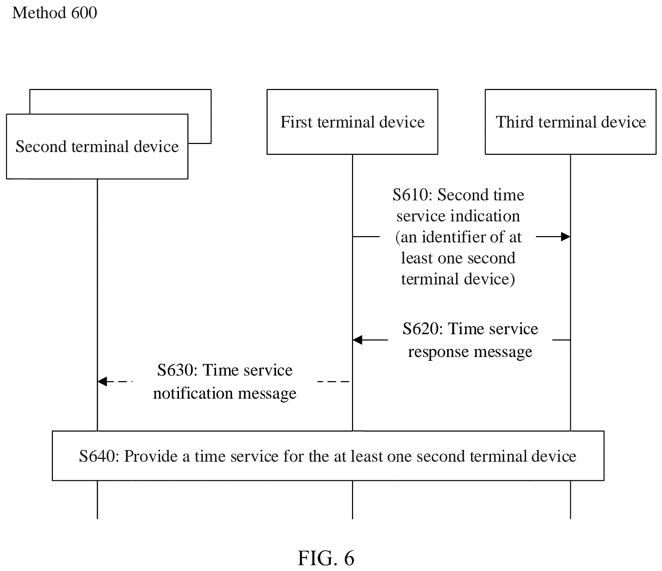

FIG. 6 is a schematic flowchart of another clock synchronization method 600 according to an embodiment of this application. The method 600 may implement clock synchronization between the first terminal device and the at least one second terminal device without depending on a network device. For example, the method 600 may be applied to a scenario in which there is no interface used for a time service between a terminal device and a network device. The following describes in detail steps included in the method 600.

S610: The first terminal device sends a third time service indication to a third terminal device. Correspondingly, the third terminal device receives the third time service indication from the first terminal device.

The third time service indication indicates the third terminal device to provide a time service for the at least one second terminal device. The third time service indication may carry an identifier of the at least one second terminal device. The third time service indication may further include a time service error budget of the at least one second terminal device.

For example, the first terminal device may send the third time service indication to the third terminal device by using a direct communication request (direct communication request) message.

Optionally, the first terminal device, the third terminal device, and the at least one second terminal device belong to one terminal device group (group).

Specifically, the first terminal device sending the third time service indication to the third terminal device may be: the first terminal device sends the third time service indication to the third terminal device when determining that a time service status of each of the at least one second terminal device changes.

It should be understood that the third terminal device is not limited in this application. For example, the third terminal device may be a terminal device whose time service status does not change in the terminal device group, or the third terminal device may be a terminal device that is relatively close to the second terminal device in the terminal device group.

Optionally, before the first terminal device sends the third time service indication, the first terminal device may determine whether time service statuses of a plurality of terminal devices change. The plurality of terminal devices and the first terminal device may belong to one terminal device group. The first terminal device may send the third time service indication to the third terminal device when determining that a time service status of each of the at least one second terminal device changes. The plurality of terminal devices may include the at least one second terminal device and the third terminal device.

For a process in which the first terminal device determines whether the time service statuses of the plurality of terminal devices change, refer to the description in S310. Details are not described again.

Optionally, before the first terminal device sends the third time service indication to the third terminal device, the first terminal device provides a time service for the plurality of terminal devices.

For example, the first terminal device provides a time service for the plurality of terminal devices in a multicast or unicast manner, and the first terminal device may be a primary terminal device in the terminal device group.

Optionally, in S620, the third terminal device sends a time service response message to the first terminal device, and correspondingly, the first terminal device receives the time service response message from the third terminal device.

The time service response message may be a response to the third time service indication in S610.

S630: The first terminal device sends a time service notification message to the at least one second terminal device. The time service notification message is used to notify switching of a time service method.

For example, the time service notification message may be used to notify that a first time service manner is to be switched to a third time service manner, where the first time service manner is a manner in which the first terminal device provides a time service for the at least one second terminal device, and the second time service manner is a manner in which the third terminal device provides a time service for the at least one second terminal device; or the time service notification message is used to notify that the third terminal device is to provide a time service for the at least one second terminal device. The time service notification message may carry an identifier of the third terminal device.

Specifically, after receiving the time service response message from the third terminal device, the first terminal device may send the time service notification message to the at least one second terminal device. Therefore, after receiving the time service notification message, the second terminal device may accept, based on the time service notification message, a time service provided by the third terminal device.

S640: The third terminal device provides a time service for the at least one second terminal device.

For example, the third terminal device may determine a time service manner based on a time service error budget in the third time service indication, and provide a time service for the at least one second terminal device based on the time service manner.

It may be understood that, because the third terminal device provides a time service for the first terminal device, clock synchronization can be implemented between the first terminal device and the at least one second terminal device through a time service provided by the third terminal device for the at least one second terminal device. In the method, clock synchronization can be implemented between a plurality of terminal devices without depending on a network side.

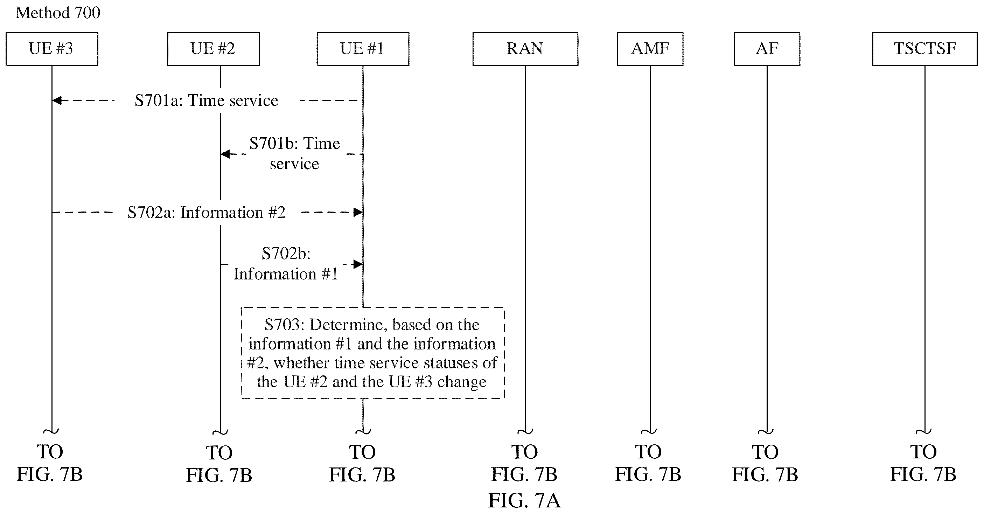

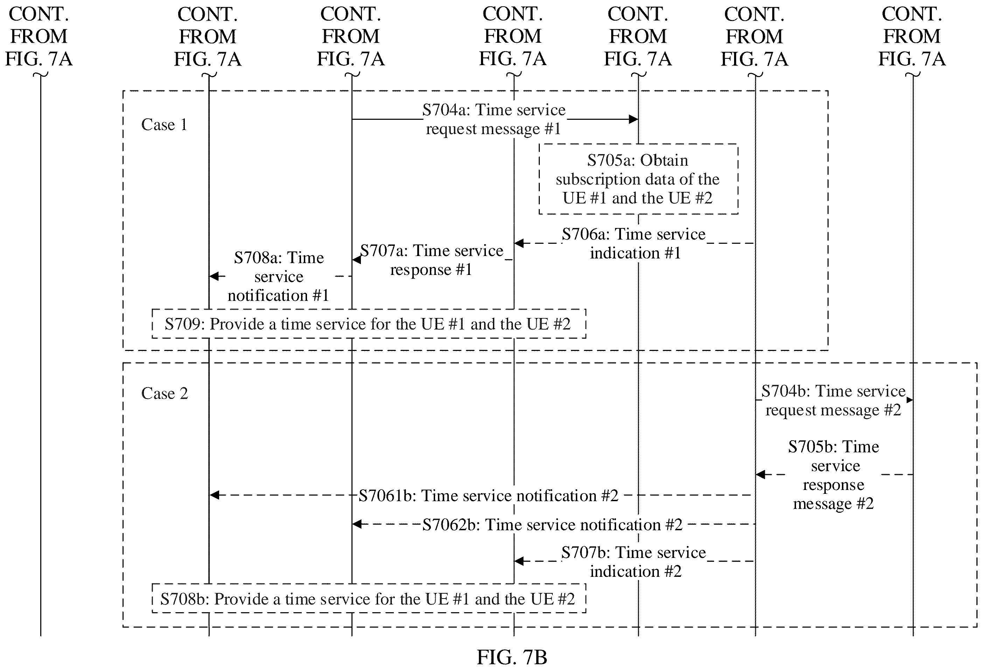

With reference to FIG. 7A and FIG. 7B, the following describes a clock synchronization method provided in an embodiment of this application by using an example in which a first terminal device is a UE #1 and at least one second terminal device includes a UE #2.

S701: The UE #1 provides a time service for the UE #2 and a UE #3.

For example, the UE #1 may provide a time service for the UE #2 and the UE #3 in a multicast or unicast manner.

This step may include S701a in which the UE #1 provides a time service for the UE #3 in the multicast manner, and S701b in which the UE #1 provides a time service for the UE #2 in the multicast manner.

The UE #1, the UE #2, and the UE #3 may be UEs that belong to one terminal device group (an identifier of the terminal device group is denoted as a group ID 1). The UE #1 may be a primary terminal device in the terminal device group, and the UE #2 and the UE #3 are secondary terminal devices.

S702: The UE #2 and the UE #3 respectively send information #1 and information #2 to the UE #1.

This step may include S702a in which the UE #2 sends the information #1 to the UE #1, and S702b in which the UE #3 sends the information #2 to the UE #1.

The information #1 (an example of first information) and the information #2 (an example of first information) are respectively used to represent time service statuses of the UE #2 and the UE #3. For example, the information #1 may include at least one of: a distance #1 (an example of a first distance) between the UE #2 and the UE #1, indication information #2 (an example of second indication information) indicating whether the UE #2 is powered on, powered off, or reset, indication information #3 (an example of third indication information) indicating whether the UE #2 performs delay compensation, indication information #4 indicating whether clock information of the UE #1 is received, indication information #5 indicating whether the UE #2 receives a time service provided by the UE #1, and signal strength #1 (first signal strength).

Similarly, the information #2 may include time service status information related to the UE #3.

S703: The UE #1 determines, based on the information #1 and the information #2, whether the time service statuses of the UE #2 and the UE #3 change.

For example, the UE #1 determines, based on the information #1, that the time service status of the UE #2 (an example of at least one second terminal device) changes, and the time service status of the UE #3 does not change. For determining whether a time service status of a UE changes, refer to the description in S310. Details are not described again.

According to different manners of requesting a time service, the following steps may be classified into two cases.

Case 1: The UE sends a time service request to a mobility management function network element (denoted as an AMF below), to request a RAN to provide a time service for the UE #1 and the UE #2.

S704a: The UE #1 sends a time service request message #1 to the AMF. Correspondingly, the AMF receives the time service request message #1 from the UE #1.

For example, the UE #1 sends the time service request message #1 (an example of a first request message) to the RAN, and the RAN forwards the time service request message #1 to the AMF.

The time service request message #1 includes an identifier of the UE #1 and an identifier of the UE #2. Optionally, the time service request message #1 includes a requirement of a time service error budget (error budget) of the UE #1 and a requirement of an error budget of the UE #2. The time service request message #1 may further include a group **ID 1.**

Optionally, if the time service request message #1 does not carry an error budget of a UE (including the UE #1 and the UE #2), the AMF may use a preconfigured default value as the error budget. Optionally, after obtaining the error budget of the UE, the AMF removes a time service error between a network side and a device side from the error budget of the UE based on a clock synchronization manner, to obtain a Uu air interface time service error (that is, a Uu error budget of the UE).

Optionally, in S705a, the AMF obtains subscription data of the UE #1 and the UE #2.

For example, the AMF may separately obtain UE access and mobility data (UE access and mobility Data) of the UE #1 and the UE #2 from a UDM by invoking a subscription data obtaining (Nudm_SDM_Get) service provided by the UDM.

Optionally, the AMF may determine, based on the subscription data, whether the UE #1 and the UE #2 satisfy a first condition, or the AMF may request the UDM to determine whether the UE #1 and the UE #2 satisfy a first condition, and receive an indication indicating whether the UE #1 and the UE #2 satisfy the first condition. For the first condition, refer to the description of S310. Details are not described again.

S706a: The AMF sends a time service indication #1 to the RAN. Correspondingly, the RAN receives the time service indication #1 from the AMF.

For example, when determining that the UE #1 and the UE #2 satisfy the first condition, the AMF sends the time service indication #1 to the RAN.

The time service indication #1 indicates the RAN to provide a time service for the UE #1 and the UE #2, and the time service indication #1 may carry identifiers of the UE #1 and the UE #2. Optionally, the time service indication #1 may carry Uu error budgets of the UE #1 and the UE #2.

The UE #1 is used as an example. The Uu error budget of the UE #1 may be a time service error budget carried in the time service request message #1. Alternatively, the Uu error budget of the UE #1 may be a Uu error budget determined by the AMF based on the error budget of the UE #1. Alternatively, the Uu error budget of the UE #1 may be a Uu error budget determined based on an error budget subscribed by the UE #1. Alternatively, the Uu error budget of the UE #1 may be a Uu error budget subscribed by the UE #1.

S707a: The RAN sends a time service response #1 to the UE #1. Correspondingly, the UE #1 receives the time service response from the RAN.

The time service response #1 may be a response to the time service request message #1.

S708a: The UE #1 sends a time service notification #1 to the UE #2. Correspondingly, the UE #2 receives the time service notification #1 from the UE #1.

The time service notification #1 is used to notify the UE #2 of switching of a time service manner, or the time service notification #1 indicates the RAN to provide a time service for a UE. The time service notification #1 may carry an identifier of the RAN.

S709: The RAN provides a time service for the UE #1 and the UE #2.

For example, after receiving the time service indication #1 from the AMF, the RAN provides a time service for the UE #1 and the UE #2. In other words, the RAN may provide a time service for the UE #1 and the UE #2 based on an air interface.

For example, the UE #1 and the UE #2 may obtain a reference clock signal of the RAN based on a plurality of time service methods such as an RTT-based time service method and a TA-based time service method. This is not limited in this application.

Case 2: The UE sends a time service request to a TSCTSF, to request the RAN to provide a time service for the UE #1 and the UE #2.

S704b: An AF sends a time service request message #2 to the TSCTSF. Correspondingly, the TSCTSF receives the time service request message #2 from the AF.

For example, when determining that the time service status of the UE #2 changes, the UE #1 sends the time service request message #2 (an example of a first request message) to the TSCTSF by using the AF.

Specifically, the AF may send the time service request message #2 to an NEF, and the NEF further forwards the time service request message #2 to the TSCTSF. The time service request message #2 includes an identifier of the UE #1 and an identifier of the UE #2. Optionally, the time service request may include requirements of time service error budgets (error budget) of the UE #1 and the UE #2.

If the time service request message #2 does not carry the error budget of the UE #2, the TSCTSF may use a preconfigured default value as the error budget of the UE #2. Optionally, after obtaining the error budget of the UE #2, the TSCTSF removes a time service error between a network side and a device side from the error budget of the UE #2 based on a clock synchronization manner, to obtain a Uu air interface time service error (that is, a Uu error budget of the UE #2).

Optionally, the TSCTSF may determine, based on subscription data, whether the UE #1 and the UE #2 satisfy a first condition, or the TSCTSF may request a UDM to determine whether the UE #1 and the UE #2 satisfy a first condition, and receive an indication indicating whether the UE #1 and the UE #2 satisfy the first condition. For the first condition, refer to the description of S310. Details are not described again.

S705b: The TSCTSF sends a time service response message #2 to the AF. Correspondingly, the AF receives the time service response message #2 from the TSCTSF.

For example, the time service response message #2 may be a response to the time service request message #2.

S706b: The AF separately sends a time service notification #2 (including S7061b and S7062b) to the UE #1 and the UE #2. Correspondingly, the UE #1 and the UE #2 each receive the time service notification #2 from the AF.

The time service notification #2 is used to notify the UE (including the UE #1 and the UE #2) of switching of a time service manner. In other words, the UE is notified that the RAN is to provide a time service for the UE.

S707b: The AF sends a time service indication #2 to the RAN. Correspondingly, the RAN receives the time service indication #2 from the AF.

The time service indication #2 indicates to provide a time service for the UE #1 and the UE #2. The time service indication #2 may carry the identifiers of the UE #1 and the UE #2. Optionally, the time service indication #2 carries a Uu error budget of the UE #1 and the Uu error budget of the UE #2.

S708b: The RAN provides a time service for the UE #1 and the UE #2.

For this step, refer to the description in S709.

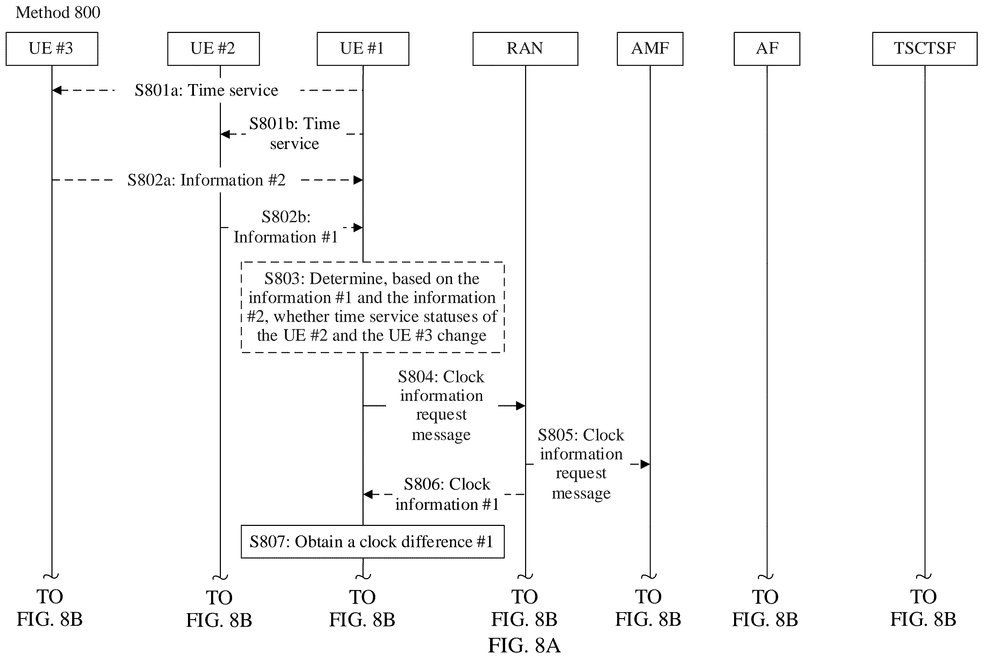

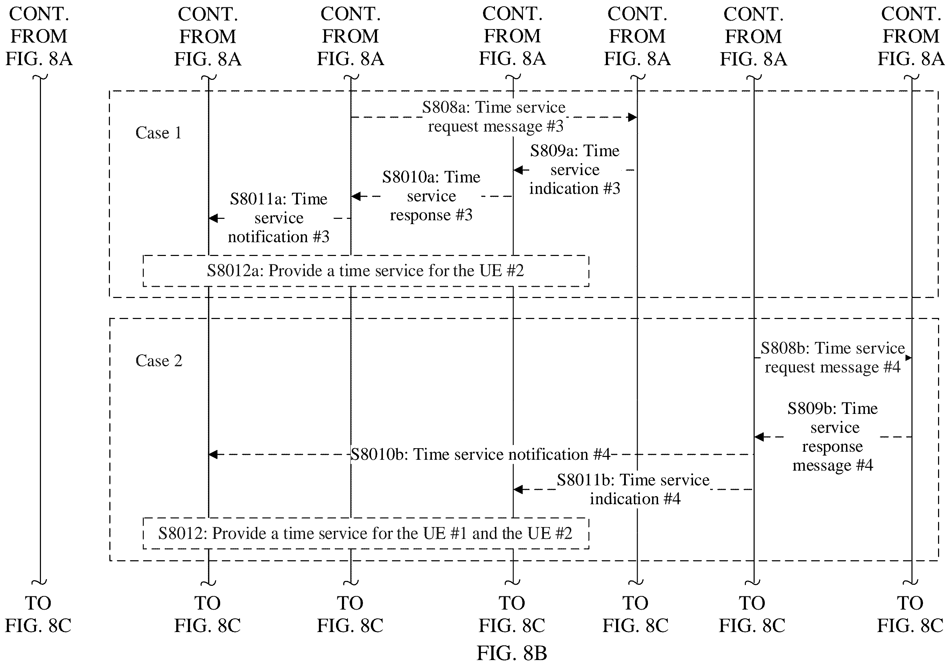

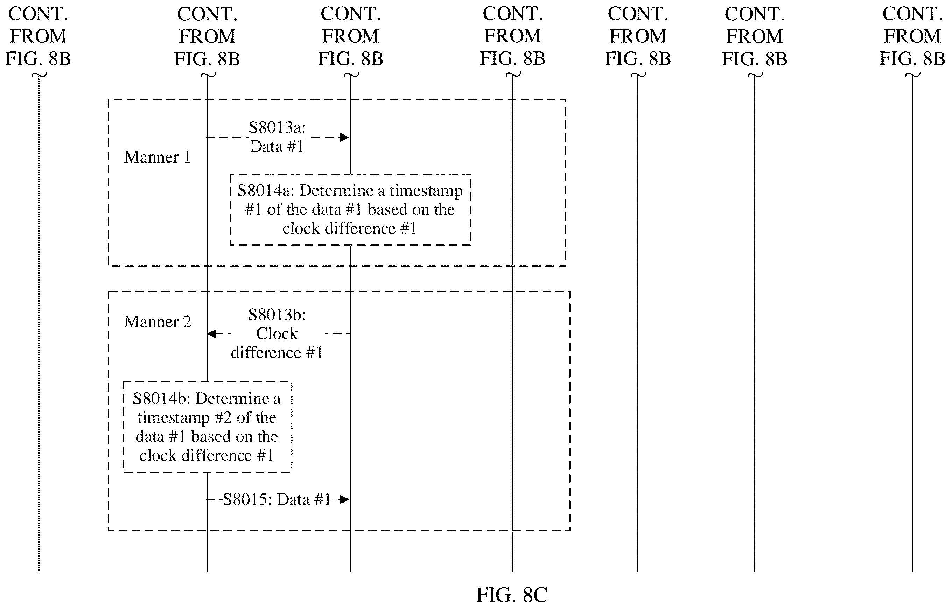

With reference to FIG. 8A, FIG. 8B, and FIG. 8C, the following describes another clock synchronization method provided in an embodiment of this application by using an example in which a first terminal device is a UE #1 and at least one second terminal device includes a UE #2. The method may be applied to a scenario in which stability is required for a clock of the UE #1, that is, implementing clock synchronization between the UE #1 and the UE #2 when the clock of the UE #1 does not change.

S801: The UE #1 provides a time service for the UE #2 and a UE #3.

For the UE #1, the UE #2, and the UE #3, refer to the description in S701.

S802: The UE #2 and the UE #3 respectively send information #1 and information #2 to the UE #1.

The information #1 (an example of first information) and the information #2 (an example of first information) are respectively used to represent time service statuses of the UE #2 and the UE #3. For the information #1 and the information #2, refer to the description in S702.

S803: The UE #1 determines, based on the information #1 and the information #2, whether the time service statuses of the UE #2 and the UE #3 change.

For example, the UE #1 determines, based on the information #1, that the time service status of the UE #2 (an example of at least one second terminal device) changes, and the time service status of the UE #3 does not change. For determining whether a time service status of a UE changes, refer to the description in S310. Details are not described again.

S804: The UE #1 sends a clock information request message to a RAN. Correspondingly, the RAN receives the clock information request message from the UE #1.

For example, when determining that the time service status of the UE #2 changes, the UE #1 sends the clock information request message (an example of a third request message) to the RAN.

The clock information request message is used to request clock information of a deployed clock (an example of a second clock) of the RAN. The clock information is used to determine a difference between a clock of the UE #1 and the clock of the RAN. For the clock information, refer to the description in S410. Details are not described again.

Optionally, in S805, the RAN sends the clock information request message to an AMF. Correspondingly, the AMF receives the clock information request message from the RAN.

After receiving the clock information request message from the UE #1, the RAN may determine, by using the AMF, whether the UE #1 can receive clock information of the clock of the RAN.

For example, after receiving the clock information request message from the RAN, the AMF may obtain subscription data of the UE #1. For example, the AMF may separately obtain UE access and mobility data (UE access and mobility Data) of the UE #1 from a UDM by invoking a subscription data obtaining (Nudm_SDM_Get) service provided by the UDM; the AMF determines, based on the subscription data of the UE #1, whether the UE #1 can receive the clock information of the RAN; and the AMF may send indication information to the RAN, to indicate whether the RAN sends the clock information to the UE #1.

When the UE #1 can receive the clock information, the method further includes:
S806: The RAN sends clock information #1 to the UE #1.

The clock information #1 is an example of the clock information of the second clock. For the clock information of the second clock, refer to the description in S410.

S807: The UE #1 determines a clock difference #1 (an example of a first clock difference) based on the clock information.

The clock difference #1 is a difference between a deployed clock of the UE #1 (an example of a first clock) and the deployed clock of the RAN.

Subsequently, the UE #1 requests the RAN to provide a time service for the UE #2. According to different manners of requesting a time service, the following steps may be classified into two cases.

Case 1: The UE #1 sends a time service request to the AMF, to request the RAN to provide a time service for the UE #2.

S808a: The UE #1 sends a time service request message #3 to the AMF. Correspondingly, the AMF receives the time service request message #3 (an example of a second request message) from the UE #1.

For example, the UE #1 sends the time service request message #3 to the RAN, and the RAN forwards the time service request message #3 to the AMF. The time service request message #3 is used to request a time service for the UE #2, and the time service request message #3 may include an identifier of the UE #2. Optionally, the time service request message #3 further includes a requirement of a time service error budget (error budget) of the UE #2. The time service request message #1 may further include a group ID 1.

If the time service request message #2 does not carry the error budget of the UE #2, the AMF may use a preconfigured default value as the error budget of the UE #2. Optionally, after obtaining the error budget of the UE #2, the AMF removes a time service error between a network side and a device side from the error budget of the UE #2 based on a clock synchronization manner, to obtain a Uu air interface time service error.

S809a: The AMF sends a time service indication #3 to the RAN. Correspondingly, the RAN receives the time service indication #3 from the AMF.

The time service indication #3 indicates the RAN to provide a time service for the UE #2, and the time service indication #3 may carry the identifier of the UE #2. Optionally, the time service indication #3 may carry the Uu error budget of the UE #2.

S8010a: The RAN sends a time service response #3 to the UE #1. Correspondingly, the UE #1 receives the time service response #3 from the RAN.

After receiving the time service indication #3 from the AMF, the RAN sends the time service response #3 to the UE #1. The time service response #3 may be a response to the time service request message #3.

S8011a: The UE #1 sends a time service notification #3 to the UE #2. Correspondingly, the UE #2 receives the time service notification #3 from the UE #1.

The time service notification #3 is used to notify the UE #2 of switching of a time service manner, or the time service notification #1 indicates the RAN to provide a time service for a UE. The time service notification #3 may carry an identifier of the RAN.

For example, after receiving the time service response #3 from the RAN, the UE #1 sends the time service notification #3 to the UE #2, so that the UE #2 can switch a time service manner, in other words, the UE #2 receives a time service provided by the RAN.

S8012a: The RAN provides a time service for the UE #2.

For example, the UE may obtain a reference clock signal of the RAN based on a plurality of time service methods such as an RTT-based time service method and a TA-based time service method. This is not limited in this application.

Case 2: The UE sends a time service request to a TSCTSF, to request the RAN to provide a time service for the UE #2.

S808b: An AF sends a time service request message #4 to the TSCTSF. Correspondingly, the TSCTSF receives the time service request message #4 from the AF.

For example, when determining that the time service status of the UE #2 changes, the UE #1 sends the time service request message #4 (an example of a second request message) to the TSCTSF by using the AF.

Specifically, the AF may send the time service request message #4 to an NEF, and the NEF further forwards the time service request message #4 to the TSCTSF. The time service request message #4 includes the identifier of the UE #2. Optionally, the time service request message #4 may include a requirement of a time service error budget (error budget) of the UE #2.

If the time service request message #4 does not carry the error budget of the UE #2, the TSCTSF may use a preconfigured default value as the error budget of the UE #2. Optionally, after obtaining the error budget of the UE #2, the TSCTSF removes a time service error between a network side and a device side from the error budget of the UE #2 based on a clock synchronization manner, to obtain a Uu error budget of the UE #2.

S809b: The TSCTSF sends a time service response message #4 to the AF. Correspondingly, the AF receives the time service response message #4 from the TSCTSF.

For example, the time service response message #4 may be a response to the time service request message #4.

S8010b: The AF sends a time service notification #4 to the UE #2. Correspondingly, the UE #2 receives the time service notification #4 from the AF.

The time service notification #4 is used to notify the UE #2 of switching of a time service manner.

S8011b: The AF sends a time service indication #4 to the RAN. Correspondingly, the RAN receives the time service indication #4 from the AF.

For example, after receiving the time service response message #4 from the TSCTSF, the AF sends the time service indication #4 to the RAN.

The time service indication #4 indicates to provide a time service for the UE #2. The time service indication #4 may carry the identifier of the UE #2. Optionally, the time service indication #4 carries the Uu error budget of the UE #2.

S8012b: The RAN provides a time service for the UE #2.

The method further includes: the UE #1 performs clock synchronization processing between the UE #1 and the UE #2 based on the clock difference #1. The clock synchronization processing may include two manners.

### Manner 1:

S8013a: The UE #2 sends data #1 to the UE #1. Correspondingly, the UE #1 receives the data #1 from the UE #2.

The data #1 carries a timestamp #1 (an example of a first timestamp). It may be understood that the timestamp #1 is based on a clock of the UE #2, and the clock of the UE #2 is synchronized with the clock of the RAN. In other words, the timestamp #1 is determined based on the clock of the RAN.

S8014a: The UE #1 determines a timestamp #2 of the data #1 based on the clock difference #1.

For example, if the clock difference #1 is 100 ns, the UE #1 may add 100 ns to the timestamp #1 of the data #1. In other words, the timestamp #2 is a timestamp #1 plus 100 ns.

### Manner 2:

S8013b: The UE #1 sends the clock difference #1 to the UE #2. Correspondingly, the UE #2 receives the clock difference #1 from the UE #1.

S8014b: The UE #2 determines a timestamp #2 of the data #1 based on the clock difference.

For example, the UE #2 may calibrate the clock of the UE #2 based on the clock difference #1, and the UE #2 determines the timestamp #2 of the data #1 based on the clock of the UE #2.

For example, if the clock difference #1 is 100 ns, the UE #2 may perform an operation of adding 100 ns to the clock of the UE #2. The UE #2 determines the timestamp #2 of the data #1 based on the calibrated clock.

S8015: The UE #2 sends the data #1 to the UE #1. Correspondingly, the UE #1 receives the data #1 from the UE #2.

The data #1 carries the timestamp #2.

Optionally, the UE #1 may further send the clock difference #1 to the UE #3 (an example of a third terminal device) in a terminal device group, so that the UE #3 performs clock synchronization processing between the UE #3 and the UE #2 based on the clock difference #1. For clock synchronization processing between the UE #3 and the UE #2, refer to clock synchronization processing between the UE #1 and the UE #2. Details are not described again.

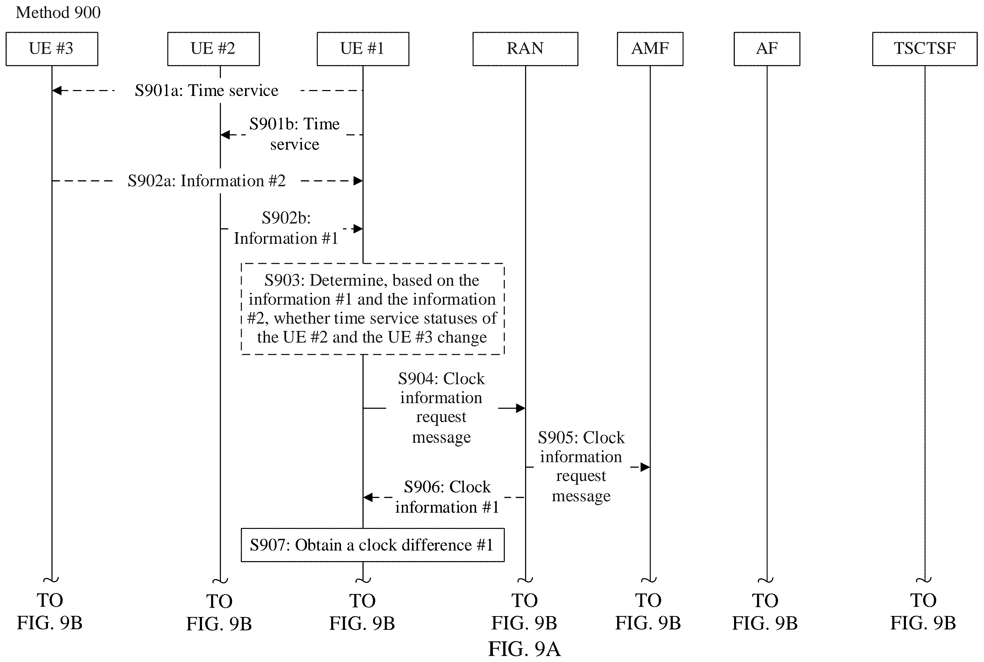

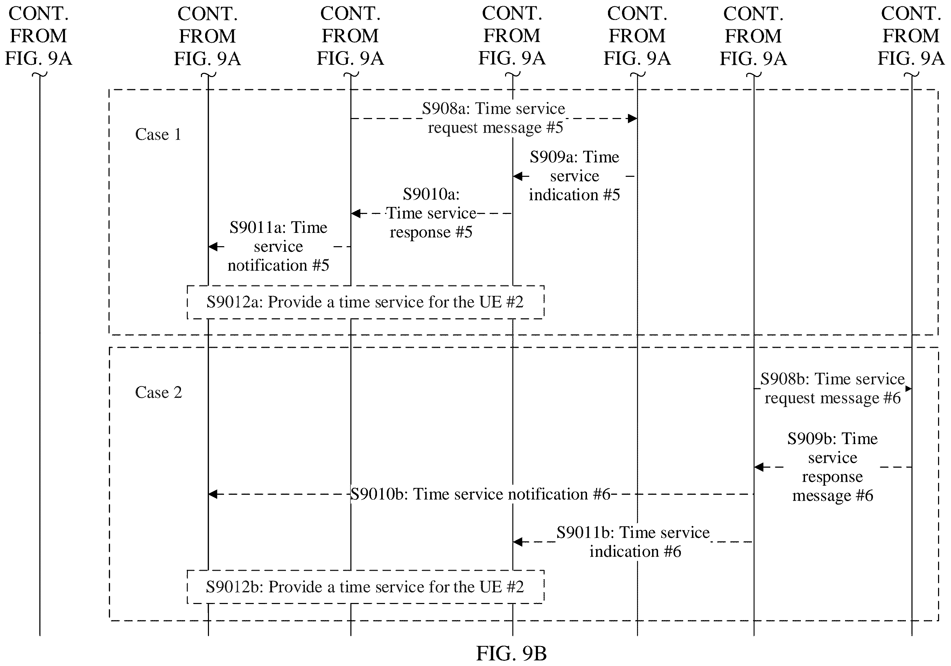

With reference to FIG. 9A and FIG. 9B, the following describes another clock synchronization method provided in an embodiment of this application by using an example in which a first terminal device is a UE #1 and at least one second terminal device includes a UE #2. The method may be applied to a scenario in which stability is required for a clock of the UE #1, that is, implementing clock synchronization between the UE #1 and the UE #2 when the clock of the UE #1 does not change.

S901: The UE #1 provides a time service for the UE #2 and a UE #3.

For the UE #1, the UE #2, and the UE #3, refer to the description in S701.

S902: The UE #2 and the UE #3 respectively send information #1 and information #2 to the UE #1.

The information #1 (an example of first information) and the information #2 (an example of first information) are respectively used to represent time service statuses of the UE #2 and the UE #3. For the information #1 and the information #2, refer to the description in S702.

S903: The UE #1 determines, based on the information #1 and the information #2, that the time service status of the UE #2 changes.

S904: The UE #1 sends a clock information request message to a RAN. Correspondingly, the RAN receives the clock information request message from the UE #1.

The clock information request message is used to request clock information of a deployed clock (an example of a second clock) of the RAN. For the clock information, refer to the description in S410. Details are not described again.

Optionally, in S905, the RAN sends the clock information request message to an AMF. Correspondingly, the AMF receives the clock information request message from the RAN.

Optionally, after receiving the clock information request message from the RAN, the AMF may further obtain subscription data of the UE #1. Further, the AMF determines, based on the subscription data of the UE #1, whether the UE #1 can receive clock information of the RAN.

S906: The RAN sends clock information #1 to the UE #1.

The clock information #1 is an example of the clock information of the second clock. For the clock information of the second clock, refer to the description in S410.

S907: The UE #1 determines a clock difference #1 (an example of a first clock difference) based on the clock information.

The clock difference #1 is a difference between the deployed clock of the UE #1 (an example of a first clock) and a deployed clock of the RAN.

For steps S901 to S907, refer to the descriptions in S801 to S807.

Subsequently, the UE #1 requests a time service for the UE #2. According to different manners of requesting a time service, the following steps may be classified into two cases.

Case 1: The UE sends a time service request to the AMF, to request the RAN to provide a time service for the UE #2.

S908a: The UE #1 sends a time service request message #5 to the AMF. Correspondingly, the AMF receives the time service request message #5 (an example of a third request message) from the UE #1.

For example, the UE #1 sends the time service request message #5 to the RAN, and the RAN forwards the time service request message #5 to the AMF.

The time service request message #5 is used to request a time service for the UE #2. The time service request message #5 may include the identifier of the UE #2 and an error #1 (an example of a first error). The error #1 is determined based on the clock difference #1. The error #1 is used to determine a time service manner. In other words, the time service manner may satisfy a requirement of the error #1.

The error #1 may be an upper limit that is of an error of a time service provided by the RAN and that is required by the UE #2. The UE #1 determines the error #1 based on the clock difference #1 and an error budget of the UE #2. For example, if the error budget of the UE #2 is 1 µs, and the clock difference #1 is 100 ns, the error #1 is 900 ns.

S909a: The AMF sends a time service indication #5 to the RAN. Correspondingly, the RAN receives the time service indication #5 from the AMF.

For example, when determining that the UE #1 and the UE #2 satisfy a first condition, the AMF sends the time service indication #5 to the RAN.

The time service indication #5 indicates the RAN to provide a time service for the UE #2. The time service indication #5 may carry the identifier of the UE #2 and the error #1. Optionally, the AMF may further determine an error #3 (an example of a third error) based on the error #1, so that the RAN determines a time service manner based on the error #1 or the error #3.

S9010a: The RAN sends a time service response #5 to the UE #1. Correspondingly, the UE #1 receives the time service response #5 from the RAN.

The time service response #5 may be a response to the time service request message #5.

S9011a: The UE #1 sends a time service notification #5 to the UE #2. Correspondingly, the UE #2 receives the time service notification #5 from the UE #1.

For example, after the UE #1 receives the time service response #5 from the RAN, the UE #1 sends the time service notification #5 to the UE #2.

The time service notification #5 is used to notify the UE #2 of switching of a time service manner, or the time service notification #1 indicates the RAN to provide a time service for the UE #2. The time service notification #3 may carry an identifier of the RAN.

S9012a: The RAN provides a time service for the UE #2.

For example, the UE may obtain a reference clock signal of the RAN based on a plurality of time service methods such as an RTT-based time service method and a TA-based time service method. This is not limited in this application.

Case 2: The UE sends a time service request to a TSCTSF, to request the RAN to provide a time service for the UE #2.

S908b: An AF sends a time service request message #6 to the TSCTSF. Correspondingly, the TSCTSF receives the time service request message #6 from the AF.

For example, when determining that the time service status of the UE #2 changes, the UE #1 sends the time service request message #6 (an example of a third request message) to the TSCTSF by using the AF.

Specifically, the AF may send the time service request message #6 to an NEF, and the NEF further forwards the time service request message #6 to the TSCTSF. The time service request message #6 includes the identifier of the UE #2 and the error #1. For the error #1, refer to the description in S907a.

S909b: The TSCTSF sends a time service response message #6 to the AF. Correspondingly, the AF receives the time service response message #6 from the TSCTSF.

For example, the time service response message #6 may be a response to the time service request message #6.

S9010b: The AF sends a time service notification #6 to the UE #2. Correspondingly, the UE #2 receives the time service notification #6 from the AF.

The time service notification #6 is used to notify the UE #2 of switching of a time service manner.

S9011b: The AF sends a time service indication #6 to the RAN. Correspondingly, the RAN receives the time service indication #6 from the AF.

The time service indication #6 indicates to provide a time service for the UE #2. The time service indication #6 may carry the identifier of the UE #2 and the error #1.

S9012b: The RAN provides a time service for the UE #2.

This step is similar to S9012a. Details are not described again.

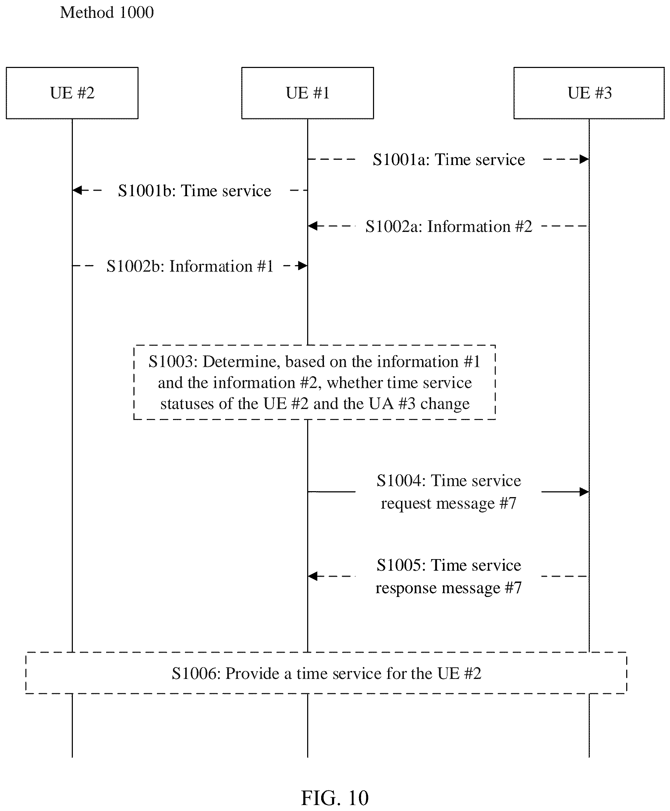

With reference to FIG. 10, the following describes another clock synchronization method 1000 provided in an embodiment of this application by using an example in which a first terminal device is a UE #1 and at least one second terminal device includes a UE #2. The method 1000 may implement clock synchronization between the UE #1 and the UE #2 without depending on a network device. For example, the method 1000 may be applied to a scenario in which there is no interface used for a time service between a terminal device and a network device.

S1001: The UE #1 provides a time service for the UE #2 and a UE #3.

For the UE #1, the UE #2, and the UE #3, refer to the description in S701.

S1002: The UE #2 and the UE #3 respectively send information #1 and information #2 to the UE #1.

The information #1 (an example of first information) and the information #2 (an example of first information) are respectively used to represent time service statuses of the UE #2 and the UE #3. For the information #1 and the information #2, refer to the description in S702.

S1003: The UE #1 determines, based on the information #1 and the information #2, whether the time service statuses of the UE #2 and the UE #3 change.

This step is similar to S703. Details are not described again.

S1004: The UE #1 sends a time service request message #7 to the UE #3. Correspondingly, the UE #3 receives the time service request message #7 from the UE #1.

For example, when the UE #1 determines that the time service status of the UE #2 changes and the time service status of the UE #3 does not change, the UE #1 sends the time service request message #7 to the UE #3.

The time service request message #7 requests to provide a time service for the UE #2. The time service request message #7 may carry an identifier of the UE #2.

S1005: The UE #3 sends a time service response message #7 to the UE #1. Correspondingly, the UE #1 receives the time service request message #7 from the UE #2.

The time service response message #7 may be a response message to the time service request message #7.

S1006: The UE #3 provides a time service for the UE #2.

For example, the UE # may send accurate reference time (accurate reference time) of a clock of the UE #3 to the UE #2 based on a PC5 interface, so that the UE #2 is synchronized with the clock of the UE #3 based on the accurate reference time.

It may be understood that, before the UE #3 provides a time service for the UE #2, the UE #1 provides a time service for the UE #3, so that clock synchronization between the UE #1 and the UE #2 can be implemented through a time service provided by the UE #3 for the UE #2.

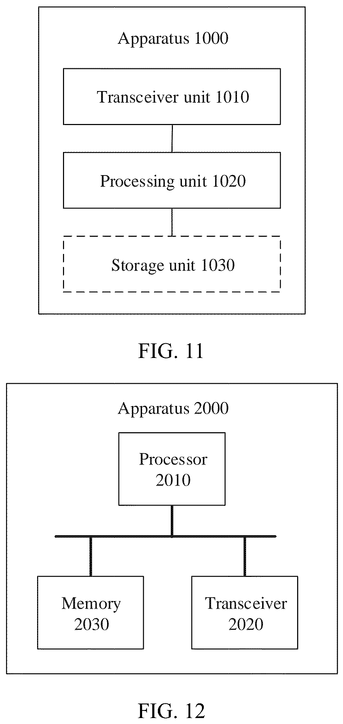

The foregoing describes in detail the clock synchronization method provided in embodiments of this application with reference to FIG. 3 to FIG. 10. The following describes in detail a communication apparatus provided in embodiments of this application with reference to FIG. 11 to FIG. 13. It should be understood that descriptions of apparatus embodiments correspond to the descriptions of the method embodiments. Therefore, for content that is not described in detail, refer to the method embodiments. For brevity, details are not described herein again.

FIG. 11 is a block diagram of a communication apparatus 1000 according to an embodiment of this application. As shown in the figure, the communication apparatus 1000 may include a transceiver unit 1010 and a processing unit 1020.

In a possible design, the communication apparatus 1000 may be the first terminal device in the foregoing method embodiments, or may be a chip configured to implement the functions of the first terminal device in the foregoing method embodiments.

It should be understood that the communication apparatus 1000 may correspond to the first terminal device in the method 300, the method 400, the method 500, or the method 600 in embodiments of this application, or correspond to the UE #1 in the method 700, the method 800, the method 900, or the method 1000 in embodiments of this application. The communication apparatus may include units configured to perform the method performed by the first terminal device in the method 300 in FIG. 3, the method 400 in FIG. 4, the method 500 in FIG. 5, or the method 600 in FIG. 6; or may include units configured to perform the method performed by the UE #1 in the method 700 in FIG. 7A and FIG. 7B, the method 800 in FIG. 8A, FIG. 8B, and FIG. 8C, the method 900 in FIG. 9A and FIG. 9B, or the method 1000 in FIG. 10. In addition, the units in the communication apparatus 1100 and the foregoing other operations and/or functions are separately used to implement a corresponding procedure in the method 300 in FIG. 3, the method 400 in FIG. 4, the method 500 in FIG. 5, the method 600 in FIG. 6, the method 700 in FIG. 7A and FIG. 7B, the method 800 in FIG. 8A, FIG. 8B, and FIG. 8C, the method 900 in FIG. 9A and FIG. 9B, or the method 1000 in FIG. 10. It should be understood that a specific process in which the units perform the foregoing corresponding steps is described in detail in the foregoing method embodiments. For brevity, details are not described herein again.

In another possible design, the communication apparatus 1000 may be the first network element in the foregoing method embodiments, or may be a chip configured to implement the functions of the first network element in the foregoing method embodiments.

It should be understood that the communication apparatus 1000 may correspond to the first network element in the method 300, the method 400, the method 500, or the method 600 in embodiments of this application, or correspond to the AMF or the TSCTSF in the method 700, the method 800, the method 900, or the method 1000 in embodiments of this application. The communication apparatus may include units configured to perform the method performed by the first network element in the method 300 in FIG. 3, the method 400 in FIG. 4, the method 500 in FIG. 5, or the method 600 in FIG. 6; or may include units configured to perform the method performed by the AMF or the TSCTSF in the method 700 in FIG. 7A and FIG. 7B, the method 800 in FIG. 8A, FIG. 8B, and FIG. 8C, the method 900 in FIG. 9A and FIG. 9B, or the method 1000 in FIG. 10. In addition, the units in the communication apparatus 1100 and the foregoing other operations and/or functions are separately used to implement a corresponding procedure in the method 300 in FIG. 3, the method 400 in FIG. 4, the method 500 in FIG. 5, the method 600 in FIG. 6, the method 700 in FIG. 7A and FIG. 7B, the method 800 in FIG. 8A, FIG. 8B, and FIG. 8C, the method 900 in FIG. 9A and FIG. 9B, or the method 1000 in FIG. 10. It should be understood that a specific process in which the units perform the foregoing corresponding steps is described in detail in the foregoing method embodiments. For brevity, details are not described herein again.

It should be further understood that the transceiver unit 1010 in the communication apparatus 1000 may correspond to a transceiver 2020 in a communication device 2000 shown in FIG. 12, and the processing unit 1020 in the communication apparatus 1000 may correspond to a processor 2010 in the communication device 2000 shown in FIG. 12.

It should be further understood that when the communication apparatus 1000 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 1010 is configured to implement signal receiving and sending operations of the communication apparatus 1000, and the processing unit 1020 is configured to implement a signal processing operation of the communication apparatus 1000.

Optionally, the communication apparatus further includes a storage unit 1030, and the storage unit 1030 is configured to store instructions.

FIG. 12 is a block diagram of a communication device 2000 according to an embodiment of this application. As shown in FIG. 12, the communication device 2000 includes at least one processor 2010 and a transceiver 2020. The processor 2010 is coupled to a memory, and is configured to execute instructions stored in the memory, to control the transceiver 2020 to send a signal and/or receive a signal. Optionally, the communication device 2000 further includes the memory 2030, configured to store the instructions.

It should be understood that the processor 2010 and the memory 2030 may be combined into one processing apparatus, and the processor 2010 is configured to execute program code stored in the memory 2030 to implement the foregoing functions. During specific implementation, the memory 2030 may alternatively be integrated into the processor 2010, or may be independent of the processor 2010.

It should be further understood that the transceiver 2020 may include a receiver (or referred to as a receiver) and a transmitter (or referred to as a transmitter). The transceiver 2020 may further include an antenna. There may be one or more antennas. The transceiver 2020 may alternatively be an antenna interface or an interface circuit.

When the communication device 2000 is a chip, the chip includes a transceiver unit and a processing unit. The transceiver unit may be an input/output circuit or a communication interface. The processing unit may be a processor, a microprocessor, or an integrated circuit integrated on the chip.

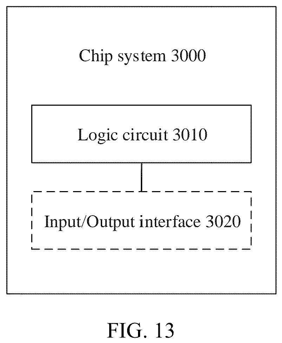

FIG. 13 is a diagram of a chip system according to an embodiment of this application. The chip system herein may also be a system including a circuit. The chip system 3000 shown in FIG. 13 includes a logic circuit 3010 and an input/output interface (input/output interface) 3020. The logic circuit is configured to couple to an input interface, and transmit data (for example, first time service configuration information) through the input/output interface, to perform the methods in FIG. 3 to FIG. 10.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on a chip (system on a chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps of the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the method provided in embodiments of this application, this application further provides a computer program product. The computer program product includes computer program code. When the computer program code is run on a computer, the computer is enabled to perform the method in any one of the embodiments shown in FIG. 3 to FIG. 10.

According to the method provided in embodiments of this application, this application further provides a computer-readable medium. The computer-readable medium stores program code. When the program code is run on a computer, the computer is enabled to perform the method in any one of the embodiments shown in FIG. 3 to FIG. 10.

According to the method provided in embodiments of this application, this application further provides a system, including the first terminal device and the first network element.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "contain", "have", and their variants all mean "include but are not limited to", unless otherwise specifically emphasized in another manner.

It should be understood that, in various embodiments of this application, first, second, and various numbers are merely used for differentiation for ease of description, and are not used for limiting the scope of embodiments of this application. For example, different information is differentiated.

All or some of the foregoing embodiments may be implemented by software, hardware, firmware, or any combination thereof. When the software is used for implementation, all or some of the embodiments may be implemented in a form of a computer program product. The computer program product includes one or more computer instructions. When the computer instructions are loaded and executed on the computer, the procedure or functions according to embodiments of this application are all or partially generated. The computer instructions may be stored in a computer-readable storage medium, or may be transmitted from one computer-readable information medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A clock synchronization method, comprising:
sending, by a first terminal device, a first request message to a first network element, wherein the first request message is used to request to provide a clock synchronization service for the first terminal device and at least one second terminal device, and the first request message comprises identifiers of the first terminal device and the at least one second terminal device; and
receiving, by the first terminal device, a time service response message from an access network device.

2. The method according to claim 1, wherein before sending, by the first terminal device, the first request message to the first network element, the method further comprises:
determining, by the first terminal device, whether time service statuses of a plurality of terminal devices change, wherein the plurality of terminal devices comprise the at least one second terminal device; and
sending, by the first terminal device, the first request message to the first network element comprises:
sending, by the first terminal device, the first request message to the first network element when determining that a time service status of each of the at least one second terminal device changes.

3. The method according to claim 2, wherein determining, by the first terminal device, whether the time service statuses of the plurality of terminal devices change comprises:
receiving, by the first terminal device, first information from each of the plurality of terminal devices, wherein the first information is used to represent a time service status of the terminal device; and
determining, by the first terminal device based on the first information, whether the time service statuses of the plurality of terminal devices change.

4. The method according to claim 3, wherein the first information comprises at least one of the following information:
first distance, second indication information, third indication information, fourth indication information, fifth indication information, and first signal strength, wherein
the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

5. The method according to any one of claims 1 to 4, wherein the first terminal device and the at least one second terminal device belong to one terminal device group, and before sending, by the first terminal device, the first request message to the first network element, the method further comprises:
providing, by the first terminal device, a time service for a terminal device in the terminal device group.

6. The method according to claim 5, wherein the first request message further comprises an identifier of the terminal device group, and the identifier of the terminal device group indicates that clock synchronization needs to be implemented between terminal devices in the terminal device group.

7. The method according to any one of claims 1 to 6, wherein the first network element is an access and mobility management function network element or a clock sensitive communication and clock synchronization function network element, and sending, by the first terminal device, the first request message to the first network element comprises:
sending, by the first terminal device, the first request message to the access and mobility management function network element by using the access network device; or
sending, by the first terminal device, the first request message to the clock sensitive communication and clock synchronization function network element by using an application function network element.

8. A clock synchronization method, comprising:
receiving, by a first network element, a first request message from a first terminal device, wherein the first request message is used to request to provide a clock synchronization service for the first terminal device and at least one second terminal device, and the first request message comprises identifiers of the first terminal device and the at least one second terminal device; and
sending, by the first network element, a first time service indication to the access network device, wherein the first time service indication indicates to provide a time service for the first terminal device and the at least one second terminal device.

9. The method according to claim 8, wherein the first network element is an access and mobility management function network element or a clock sensitive communication and clock synchronization function network element, and receiving, by the first network element, the first request message from the first terminal device comprises:
receiving, by the access and mobility management function network element, the first request message from the first terminal device by using the access network device; or
receiving, by the clock sensitive communication and clock synchronization function network element, the first request message from the first terminal device by using an application function network element.

10. The method according to claim 8 or 9, wherein the method further comprises:
obtaining, by the first network element, subscription information of the first terminal device and the at least one second terminal device; and
determining, by the first network element based on the subscription information, to send the first time service indication to the access network device.

11. The method according to claim 8 or 9, wherein the first terminal device and the at least one second terminal device belong to one terminal device group, the first request message further comprises an identifier of the terminal device group, and the method further comprises:
obtaining, by the first network element, subscription information of the terminal device group based on the identifier of the terminal device group; and
sending, by the first network element, the first time service indication to the access network device based on the subscription information of the terminal device group.

12. The method according to claim 10 or 11, wherein the subscription information comprises at least one of the following:
information about whether the first terminal device and the at least one second terminal device are allowed to accept the clock synchronization service provided by the access network device, information about whether the at least one second terminal device accepts that the application function network element requests the clock synchronization service for the at least one second terminal device, information about whether the at least one second terminal device accepts that the first terminal device requests the clock synchronization service for the at least one second terminal device, and information about whether the first terminal device has a capability of requesting the clock synchronization service for the at least one second terminal device.

13. A clock synchronization method, comprising:
obtaining, by a first terminal device, a first clock difference, wherein the first clock difference is a difference between a first clock of the first terminal device and a second clock of an access network device;
sending, by the first terminal device, a second request message to a first network element, wherein the second request message is used to request to provide a clock synchronization service for at least one second terminal device, the second request message comprises an identifier of the at least one second terminal device and a first error, the first error is an upper limit that is of an error of a time service provided by the access network device for the second terminal device and that is required by each of the at least one second terminal device, and the first error is determined based on the first clock difference; and
receiving, by the first terminal device, a time service response message from the access network device.

14. A clock synchronization method, comprising:
obtaining, by a first terminal device, a first clock difference, wherein the first clock difference is a difference between a first clock of the first terminal device and a second clock of an access network device;
sending, by the first terminal device, a second request message to a first network element, wherein the second request message is used to request the access network device to provide a clock synchronization service for at least one second terminal device, and the second request message comprises an identifier of the at least one second terminal device; and
performing, by the first terminal device, clock synchronization between the first terminal device and the at least one second terminal device based on the first clock difference.

15. The method according to claim 13 or 14, wherein obtaining, by the first terminal device, the first clock difference comprises:
sending, by the first terminal device, a third request message to the access network device, wherein the third request message is used to request clock information of the second clock;
receiving, by the first terminal device, the clock information from the access network device; and
determining, by the first terminal device, the first clock difference based on the clock information.

16. The method according to claim 13 or 14, wherein obtaining, by the first terminal device, the first clock difference comprises:
sending, by the first terminal device, a fourth request message to the access network device, wherein the fourth request message is used to request the first clock difference; and
receiving, by the first terminal device, the first clock difference from the access network device, wherein the first clock difference is determined based on clock information of the second clock.

17. The method according to claim 15 or 16, wherein the clock information comprises at least one of the following information:
a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

18. The method according to any one of claims 14 to 17, wherein performing, by the first terminal device, clock synchronization between the first terminal device and the at least one second terminal device based on the first clock difference comprises:
receiving, by the first terminal device, first data from the at least one second terminal device, wherein the first data carries a first timestamp, and the first timestamp is determined based on the second clock; and
calibrating, by the first terminal device, the first timestamp based on the first clock difference.

19. The method according to any one of claims 14 to 17, wherein performing, by the first terminal device, clock synchronization between the first terminal device and the at least one second terminal device based on the first clock difference comprises:
sending, by the first terminal device, the first time difference to the at least one second terminal device; and
receiving, by the first terminal device, first data from the at least one second terminal device, wherein the first data carries a second timestamp, and the second timestamp is determined based on the second clock and the first clock difference.

20. The method according to any one of claims 13 to 19, wherein the method further comprises:
sending, by the first terminal device, the first clock difference to a third terminal device, wherein the first clock difference is used for clock synchronization between the third terminal device and the at least one second terminal device.

21. The method according to any one of claims 13 to 20, wherein before sending, by the first terminal device, the second request message to the first network element, the method further comprises:
determining, by the first terminal device, whether time service statuses of a plurality of terminal devices change, wherein the plurality of terminal devices comprise the at least one second terminal device; and
sending, by the first terminal device, the second request message to the first network element comprises:
sending, by the first terminal device, the second request message to the first network element when it is determined that a time service status of each of the at least one second terminal device changes.

22. The method according to claim 21, wherein determining, by the first terminal device, whether the time service statuses of the plurality of terminal devices change comprises:
receiving, by the first terminal device, first information from each of the plurality of terminal devices, wherein the first information is used to represent a time service status of the terminal device; and
determining, by the first terminal device based on the first information, whether the time service statuses of the plurality of terminal devices change.

23. The method according to claim 22, wherein the first information comprises at least one of the following information:
first distance, second indication information, third indication information, fourth indication information, fifth indication information, and first signal strength, wherein
the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

24. The method according to any one of claims 13 to 23, wherein the first terminal device and the at least one second terminal device belong to one terminal device group, and before sending, by the first terminal device, the second request message to the first network element, the method further comprises:
providing, by the first terminal device, a time service for a terminal device in the terminal device group.

25. The method according to claim 24, wherein the second request message further comprises an identifier of the terminal device group, and the identifier of the terminal device group indicates that clock synchronization needs to be implemented between terminal devices in the terminal device group.

26. A clock synchronization method, comprising:
receiving, by a first network element, a second request message from the first terminal device, wherein the second request message is used to request an access network device to provide a clock synchronization service for at least one second terminal device, and the second request message comprises an identifier of the at least one second terminal device; and
sending, by the first network element, a second time service indication to the access network device, wherein the second time service indication indicates to provide a time service for the at least one second terminal device, and
a difference between a first clock of the first terminal device and a second clock of the access network device is a first clock difference, and the first clock difference is used for clock synchronization between the first terminal device and the at least one second terminal device.

27. The method according to claim 26, wherein the first network element is an access and mobility management function network element or a clock sensitive communication and clock synchronization function network element, and receiving, by the first network element, the second request message from the first terminal device comprises:
receiving, by the access and mobility management function network element, the second request message from the first terminal device by using the access network device; or
receiving, by the clock sensitive communication and clock synchronization function network element, the second request message from the first terminal device by using an application function network element.

28. The method according to claim 26 or 27, wherein the method further comprises:
obtaining, by the first network element, subscription information of the first terminal device and the at least one second terminal device; and
determining, by the first network element based on the subscription information, to send the second time service indication to the access network device.

29. The method according to claim 26 or 27, wherein the first terminal device and the at least one second terminal device belong to one terminal device group, the second request message further comprises an identifier of the terminal device group, and the method further comprises:
obtaining, by the first network element, subscription information of the terminal device group based on the identifier of the terminal device group; and
sending, by the first network element, the second time service indication to the access network device based on the subscription information of the terminal device group.

30. The method according to claim 28 or 29, wherein the subscription information comprises at least one of the following:
information about whether the first terminal device and the at least one second terminal device are allowed to accept the clock synchronization service provided by the access network device, information about whether the at least one second terminal device accepts that the application function network element requests the clock synchronization service for the at least one second terminal device, information about whether the at least one second terminal device accepts that the first terminal device requests the clock synchronization service for the at least one second terminal device, and information about whether the first terminal device has a capability of requesting the clock synchronization service for the at least one second terminal device.

31. The method according to any one of claims 26 to 30, wherein before receiving, by the first network element, the second request message from the first terminal device, the method further comprises:
sending, by the first network element, sixth indication information to the access network device, wherein the sixth indication information indicates to send clock information of the second clock to the first terminal device, and the clock information is used to determine the first clock difference.

32. The method according to claim 31, wherein the clock information comprises at least one of the following information:
a clock uncertainty of the second clock, clock quality of the second clock, coordinated universal time UTC traceability information of the access network device, clock accuracy of the second clock, a clock synchronization report of the second clock, frequency stability of the second clock, and a clock status of the second clock.

33. A clock synchronization method, comprising:
sending, by a first terminal device, a third time service indication to a third terminal device, wherein the first terminal device is configured to provide a clock synchronization service for the third terminal device, the third time service indication indicates the third terminal device to provide a time service for at least one second terminal device, and the third time service indication carries an identifier of the at least one second terminal device; and
receiving, by the first terminal device, a time service response from the third terminal device.

34. The method according to claim 33, wherein before sending, by the first terminal device, the time service indication to the third terminal device, the method further comprises:
determining, by the first terminal device, whether time service statuses of a plurality of terminal devices change, wherein the plurality of terminal devices comprise the third terminal device and the at least one second terminal device; and
sending, by the first terminal device, the third time service indication to the third terminal device when determining that a time service status of each of the at least one second terminal device changes.

35. The method according to claim 34, wherein determining, by the first terminal device, whether the time service statuses of the plurality of terminal devices change comprises:
receiving, by the first terminal device, first information from each of the plurality of terminal devices, wherein the first information is used to represent a time service status of the terminal device; and
determining, by the first terminal device based on the first information, whether the time service statuses of the plurality of terminal devices change.

36. The method according to claim 35, wherein the first information comprises at least one of the following information:
first distance, second indication information, third indication information, fourth indication information, fifth indication information, and first signal strength, wherein
the first distance is a distance between the second terminal device and the first terminal device, the second indication information indicates whether the second terminal device is powered on, powered off, or reset, the third indication information indicates whether the second terminal device performs delay compensation, the fourth indication information indicates whether clock information from the first terminal device is received, the fifth indication information indicates a radio access technology RAT supported by the second terminal device, and the first signal strength is strength of a signal transmitted between the first terminal device and the second terminal device.

37. The method according to any one of claims 33 to 36, wherein the first terminal device, the third terminal device, and the at least one second terminal device belong to one terminal device group, and before the first terminal device sends, to the third terminal device, an indication for providing the clock synchronization service, the method further comprises:
providing, by the first terminal device, the clock synchronization service for a terminal device in the terminal device group.

38. A communication apparatus, comprising at least one processor, wherein the at least one processor is configured to execute a computer program stored in a memory, so that the apparatus performs the method according to any one of claims 1 to 7, or performs the method according to any one of claims 8 to 12, or performs the method according to any one of claims 13 to 25, or performs the method according to any one of claims 26 to 32, or performs the method according to any one of claims 33 to 37.

39. A computer-readable storage medium, wherein the computer-readable storage medium stores a computer program, and when the computer program is run by a communication apparatus, the apparatus performs the method according to any one of claims 1 to 7, or performs the method according to any one of claims 8 to 12, or performs the method according to any one of claims 13 to 25, or performs the method according to any one of claims 26 to 32, or performs the method according to any one of claims 33 to 37.
